# EUROPEAN PATENT APPLICATION

(11) **EP 1 236 790 A1**
(43) Date of publication of application: **04.09.2002**
(21) Application number: 00935609.8
(22) Date of filing: 09.06.2000
(51) Int. Cl.: C10L 5/42, C10L 5/48, C21B 5/00

(54) **MOLDED LUMP AND PRODUCTION METHOD THEREFOR**

(30) Priority: 02.11.1999 JP 31301699; 10.02.2000 JP 2000033559
(71) Applicant: NKK CORPORATION, Tokyo 100-0005 (JP)
(72) Inventor: SUGAYOSHI, Tetsuro NKK Corporation, Tokyo 100-0005 (JP); TOMIOKA, Koichi NKK Corporation, Tokyo 100-0005 (JP); ISHIGURO, Hiroki NKK Corporation, Tokyo 100-0005 (JP); OGAKI, Yoji NKK Corporation, Tokyo 100-0005 (JP); NAKAMURA, Hideo NKK Corporation, Tokyo 100-0005 (JP); KONISHI, Takeshi NKK Corporation, Tokyo 100-0005 (JP); TERADA, Kaneo NKK Corporation, Tokyo 100-0005 (JP); NEMOTO, Kenichi NKK Corporation, Tokyo 100-0005 (JP); WAKAMATSU, Shinichi NKK Corporation, Tokyo 100-0005 (JP); NAKATANI, Hiroshi NKK Corporation, Tokyo 100-0005 (JP); OYANAGI, Yasuaki NKK Corporation, Tokyo 100-0005 (JP); KANATANI, Genji NKK Corporation, Tokyo 100-0005 (JP); ASANUMA, Minoru NKK Corporation, Tokyo 100-0005 (JP); TOHMA, Ichiro NKK Corporation, Tokyo 100-0005 (JP); ABE, Seiichi NKK Corporation, Tokyo 100-0005 (JP)
(74) Representative: HOFFMANN - EITLE
(86) International application number: JP0003757
(87) International publication number: WO01032383

(57) **Abstract**

Waste plastics including solid plastics, thin plastics, and foamy plastics are fed into a ring die of an extrusion molding machine. The waste plastics are either semi-melted or melted, and are then extruded onto an outer circumferential surface the ring die through die cavities. Thus, granular plastic moldings are extruded onto the outer circumferential surface of the ring die through the die cavities, and are then cut or scraped from the outer circumferential surface of the ring die. The pellets have a melt-solidified surface, and have a strength sufficient to reach a predetermine zone in a raceway of a furnace and a grain diameter sufficient to be fed at a velocity higher than a limiting velocity thereof during injection to the furnace.

## Description

### FIELD OF THE INVENTION

The present invention relates to a method for producing pellets by using waste plastics (plastics-based wastes) collected as general wastes and industrial wastes, and to pellets produced by to the method. More specifically, the present invention relates to pellets to be used as a raw material which is injected into a blast furnace, a cement kiln, or the like, and to a method for producing the pellets.

### DESCRIPTION OF THE RELATED ARTS

When waste plastics are used as, for example, an injection raw material for a blast furnace, the waste plastics are pneumatically transported to tuyeres and are then injected into the blast furnace through the tuyeres. The waste plastics are therefore preliminarily processed into pellets that have a grain size and a bulk density to be appropriate for pneumatic transportation and injection into the blast furnace. However, problems can occur with, particularly, filmy plastics. Since the filmy plastics have a lower bulk density in comparison with that of a solid (lump) plastics, the material simply subjected to a crushing process tends to clog the inside of a piping during the pneumatic transportation. As such, as an essential condition, the filmy plastics need to be granulated into pellets having a high bulk density.

Conventionally, waste plastics are selected into solid (lump) plastics and filmy plastics. The solid plastics are processed to be granular through crushing and pulverization. The filmy plastics are processed to be granular through heating and pelletizing.

To heat and pellet the filmy plastics, known methods include a method in which the filmy plastics is crushed and agitated using a rotary blade. Concurrently, frictional heat occurring therein or external heating is applied to cause the plastics to melt or semi-melt. Thereafter, water is sprayed over the melted or semi-melted plastics to cool the plastics. Thus, the plastics are formed into granular plastics.

However, the above-described pelletizing method has the following disadvantages:
- since the method uses a batch process, the processing efficiency is low;
- since water is used for cooling, a subsequent drying step needs to be performed; and
- nonuniformity occurs in the grain size of the granular plastics that are obtained according to, for example, the processing condition and the plastics-feed amount.

JP-A-11-156855 discloses a preliminary processing method using an extrusion-molding machine for filmy plastics. According to the proposed method, a filmy plastics separated from a waste plastics is pulverized, and is then separated from metallic components. Subsequently, the method uses the extrusion molding machine comprising a ring die, which has a plurality of die cavities formed of through-holes, and a roller provided to be rotational in contact with an inner peripheral surface of the ring die. Then, the roller pushes the filmy plastics into the cavities of the die to compress the filmy plastics, thereby forming the plastics to be granular.

The above-described method exhibits, for example, the following advantages. Since water need not be sprayed over the processed plastics, dry granular plastics can be obtained. In addition, since continual processes can be implemented, a high processing efficiency (productivity) can be obtained. Moreover, because the method is of a type of extruding the plastics through the die cavities, granular plastics having a uniform grain size can be obtained.

As a result of experiments performed by the inventors, however, the granular plastics formed by performing a preliminary process for the filmy plastics according to the above-described conventional method was found to have an insufficient strength. As such, the granular plastic moldings tend to collapse in stages, for example, handling after processing and pneumatic transportation. The collapse causes fluffy matters that can easily cause problems of, for example, clogging the inside of piping during, for example, pneumatic transportation and injection through tuyeres. Conceivable methods for improving the strength of the thus-granular plastic moldings include, for example, a method in which external heating is performed to increase the meltability of the filmy plastics for the process in the cavities of the ring die. However, when the external heating is applied to increase the meltability of the filmy plastics, melted plastic flows out of the die cavity. As such, appropriate granular plastic moldings cannot be obtained.

In addition, the granular plastic moldings, which have a low strength and hence tend to collapse, are poor as an injection raw material since they have a low burning efficiency. With the plastic moldings having a low strength, the grains collapse when, for example, they are pneumatically transported, are injected into the blast furnace, and are then transferred into a raceway on the front of tuyeres in a small form after collapsed. The plastics in the small form disperse immediately after they have been sent into the raceway. That is, since a residence time of the plastics in the raceway is very short, the burning efficiency is reduced.

### SUMMARY OF THE INVENTION

It is an object of the present invention to provide a method of producing pellets, the method being capable of appropriately and efficiently processing waste plastics including filmy plastics into granular plastic moldings having a strength that is necessary as a blast-furnace raw material.

To achieve the object, first, the present invention provides a method for producing pellets, comprising the steps of:
providing waste plastics comprising solid plastics (A) originating in molded plastics and at-least one plastics (B) selected from the group of thin plastics and foamy plastics that originate in non-molded plastics; and
pelletizing the waste plastics so that at least a part of the at-least one plastics (B) is either semi-melted or melted, and at least a part of the solid plastics (A) is neither semi-melted nor melted to remain in a solid state, the pelletizing comprising compressing, crashing and extruding the waste plastics.

The pellets are preferably used as either an injection raw material for a furnace or a feed raw material for a coke oven.

Preferably, a weight ratio (A)/{(A) + (B)}, that is, a weight ratio of the solid plastics (A) to the sum of the solid plastics (A) and the at least one plastics (B) selected from the group of the thin plastics and the foamy plastics that originate in the non-molded plastics, is in a range of 0.1 to 0.7. More preferably, the weight ratio is in a range of from 0.2 to 0.6.

Preferably, the method further comprises the step of mixing the solid plastics (A) and the at least one plastics (B) before the pelletizing step. Alternatively, the step of pelletizing preferably comprises mixing, compressing, crashing and extruding the waste plastics.

The step of performing pelletizing preferably comprises:
feeding the waste plastics into a extrusion molding machine, the extrusion molding machine comprising a ring die having a plurality of die cavities to pass through, and at least one roller provided inside of the ring die to be in contact with an inner peripheral surface of the ring die;
   and
compressing and crashing the waste plastics between the roller and the inner peripheral surface of the ring die, pushing the waste plastics into the die cavities, and extruding the waste plastics through the die cavities.

Preferably, the step of pelletizing further comprises the step of cutting or scraping granular plastic moldings extruded onto an outer surface of the ring die through the die cavities.

Second, the present invention provides pellets containing a synthetic resin, comprising:
a melt-solidified surface; and
a strength sufficient to reach a predetermine zone in a raceway of a furnace and a grain diameter sufficient to be fed at a velocity not lower than a limiting velocity thereof during injection into the furnace,
wherein:
the strength sufficient to reach the predetermine zone in the raceway of the furnace grain strength has an average strength index (δ) ≥ 500, where δ = Σδiωi (δi = ratio between a load (kg) and a displacement (mm) when a vertical load is applied to the grain, and ωi = weight ratio); and
the grain diameter sufficient to be fed at the velocity not lower than the limiting velocity has a value not smaller than (3 × d² × t/2)^{1/3}, where d = diameter of the pellet, and t = length of the pellet.

Third, the present invention provides a method of producing pellets, comprising:
preparing a ring die including a plurality of through-cavities of which T/d is in a range of from 6 to 12, where T represents the effective thickness of the ring die, and d represents the diameter of the through-cavity;
preparing a pelletizer including the ring die and a roller disposed inside thereof; and
feeding a raw material containing a synthetic resin into the ring die.

Fourth, the present invention provides pellets containing a synthetic resin material, characterized by:
a melt-solidified surface; and
the synthetic resin material including at least 10% of a component having a melting point in a range of from 50 to 300°C.

The synthetic resin material contains paper-containing filmy plastics.

### BRIEF DESCRIPTION OF THE DRAWINGS

Fig. 1 is a perspective view schematically showing an extrusion-molding machine to be used in Embodiment 1;
Fig. 2 is a front view schematically showing the extrusion-molding machine shown in Fig. 1;
Fig. 3 is an explanatory view schematically showing a cross section of granular plastic moldings that are obtained in Embodiment 1;
Fig. 4 is a graph showing the relationship between a strength of granular plastic moldings of solid plastics and weight ratio of solid plastics to the sum of the solid plastics and at least one plastics selected from the group of thin plastics and foamy plastics;
Fig. 5 is a schematic view showing a waste-plastics preliminary processing method according to Embodiment 1;
Fig. 6 is a schematic view showing a waste-plastics preliminary processing method according to Embodiment 1;
Fig. 7 is a schematic view showing a waste-plastics preliminary processing method according to Embodiment 1;
Fig. 8 is a schematic view showing a waste-plastics preliminary processing method according to Embodiment 1;
Fig. 9 is a schematic view showing a waste-plastics preliminary processing method according to Embodiment 1;
Fig. 10 is a schematic view showing a waste-plastics preliminary processing method according to Embodiment 1;
Fig. 11 is a diagram showing the relationship between the pelletizing degree (grain diameter and strength) and conversion ratio according to Embodiment 2;
Fig. 12 is a diagram showing the relationship among the average strength index, the pellet grain diameter, and the conversion ratio according to Embodiment 2;
Fig. 13 is a diagram showing the relationship among T/d, the adherent moisture content, and the pelletizing degree according to Embodiment 2;
Fig. 14 is a diagram showing the relationship between T/d and the adherent moisture content in detail according to Embodiment 2;
Fig. 15 is a diagram showing the relationship between D/d and the pelletizing degree according to Embodiment 2;
Fig. 16 is a diagram showing the relationship between the adherent moisture content and the pelletizing strength according to Embodiment 2;
Fig. 17 shows a cross-sectional view of a pelletizer according to Embodiment 2;
Fig. 18 shows the relationship among a cutter, the thickness of a die, the diameter of a cavity of the die, and the length of the pellet according to Embodiment 2;
Fig. 19 shows the relationship among a cutter, the thickness of a die, the diameter of a cavity of the die, and the length of the pellet according to Embodiment 2;
Fig. 20 shows an outline of a method according to Embodiment 3; and
Fig. 21 is an enlarged view of pellet according to Embodiment 3.

### EMBODIMENT FOR CARRYING OUT THE INVENTION

### EMBODIMENT 1

The inventors of the present invention carried out the research regarding causes for not being able to obtain a granular plastic moldings that have a sufficiently high strength and an improving measure therefore. As a result, the inventors obtained knowledge as described below in items (A) to (C).
(A) Granular plastic moldings granulated only from filmy plastics are formed of a plastics solidified after the plastics were semi-melted or melted. In this case, however, a sufficiently high strength cannot be obtained. A cause for the above is considered that the granular plastic moldings do not include a solid component that effectively functions as nucleuses for preserving the strength of the grain strength.
(B) On the other hand, when solid plastics and filmy plastics are mixed at an appropriate ratio and the mixture is pelletized into granular plastic moldings, the strength of the granular plastic moldings can be significantly increased. The granular plastic moldings can be prevented from collapsing during pneumatic transportation and injection. More concretely, the pelletizing comprises compressing, crashing and extruding the waste plastics. The pelletizing is performed such that at least a part of the filmy plastics is either semi-melted or melted, and in addition, at least a part of the solid plastics remains neither semi-melted nor melted.
(C) The granular plastic moldings obtained through the pelletizing are considered to have the high strength for the following reason. The granular plastic moldings are formed from the filmy plastics, at least a part of which is either semi-melted or melted, is used as a "matrix". The granular plastic moldings have solid plastic grains (solid plastics remaining neither semi-melted nor melted in the pelletizing step) that individually functions as "nuclei", and the "matrix" functions as a binder for binding the "nuclei" with one another.

The conventional arts proposed two basic solutions for using the waste plastics as an injection raw material.

According to the first solution, the solid (lump) plastics are subjected to a preliminary treatment by crushing and pulverizing. The granular plastics can be obtained only by crushing and pulverizing the solid plastics. The obtained granular plastics have a high pneumatic transportability. The preliminary treatment can be implemented at the lowest cost.

According to the second solution, the filmy plastics are preliminarily selected from the solid plastics, and are then pelletized into the granular plastics by using the pelletizer with the heater or the extrusion-molding machine. The second solution is performed for the reason that the filmy plastics subjected only to the crushing and pulverizing treatment tend to clog inside of a piping during, for example, pneumatic transportation.

In this connection, the inventors of the present invention found the following views:
(A) When the extrusion-molding machine is used to pellet the waste plastics, the solid plastics and the filmy plastics are mixed together at an appropriate ratio, and the mixture is then pelletized into a predetermined form. Thereby, the strength of the resultant granular plastic moldings can be significantly increased.
(B) According to the above method, the preliminary treatment for the waste plastics can be carried out more appropriately and efficiently than in the conventional method in which the solid plastics and filmy plastics are separated from each other, and each of the solid plastics and filmy plastics is subjected to the different preliminary treatments.

Embodiment 1 was implemented based on the above-described views. A method for producing the pellets according to Embodiment 1 comprises the steps of: preparing waste plastics; and pelletizing the waste plastics.

The step of preparing the waste plastics comprises preparing the waste plastics including solid plastics (A) and at least one plastics (B). The solid plastics (A) originates in molded plastics, and the at least one plastics (B) is selected from the group of thin plastics and foamy plastics that originate in non-molded plastics.

The pelletizing step comprises pelletizing the waste plastics so that at least a part of the at least one plastics (B) is either semi-melted or melted, and at least a part of the solid plastics (A) is neither semi-melted nor melted to remain in a solid state. The pelletizing includes compressing, crashing and extruding the waste plastics.

The pellets are preferably used as either an injection raw material to a furnace or a feed material to a coke oven.

A ratio expressed by (A)/{(A) + (B)} in weight is preferably ranged from 0.1 to 0.7, which is the ratio of the solid plastics (A) to the sum (A) + (B). In the above, (B) represents the at least one plastics selected from the group of the thin plastics and the foamy plastics. The thin plastics and the foamy plastics originate in the non-molded plastics material. It is more preferable that the weight ratio be ranged from 0.2 to 0.6.

Preferably, prior to the step of pelletizing, the method for producing the pellets further comprises the step of mixing the solid plastics (A) with the waste plastics including the at-least one plastics (B). Moreover, the step of pelletizing may comprise mixing, compressing, crashing and extruding the waste plastics.

The step of pelletizing preferably comprises the steps of:
feeding a waste plastics to an extrusion molding machine, the extrusion molding machine comprising a ring die having a plurality of die cavities provided to pass through and at least one roller provided inside of the ring die to be in contact with an inner peripheral surface of the ring die;
   and
compressing and crashing the waste plastics between the roller and the inner peripheral surface of the ring die, pushing the waste plastics into the die cavities, and extruding the waste plastics through the die cavities.

The step of pelletizing preferably further comprises the step of cutting or scraping molded plastics extruded to an outer surface of the ring die through the die cavities to obtain granular plastic moldings.

In addition to molded plastics in the form of a plastics product, molded plastics include plastics of various other types. For example, the plastics include plastics fractions occurring in plastics-molding, and plastics-component fractions occurring in assembly of molded plastic products or in process of molded plastic products into plastics components or products.

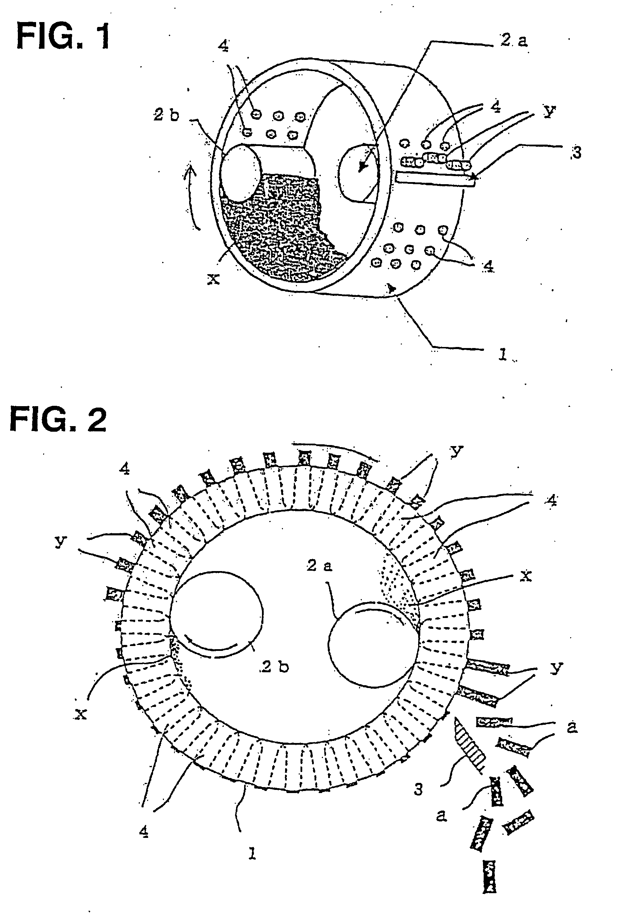

Figs. 1 and 2 schematically show an extrusion-molding machine to be used in Embodiment 1. Fig. 1 is a perspective view of the extrusion-molding machine, and Fig. 2 is a front view thereof.

The extrusion-molding machine includes a ring die 1 having a plurality of die cavities 4 provided on its overall circumference, rollers 2a and 2b provided inside of the ring die 1 to be rotational in contact with an inner peripheral surface of the ring die 1, and a cutter 3 disposed outside of the ring die 1. The perspective view of Fig. 1 partly omits the die cavities 4 provided to pass through on the overall wall of the ring die 1.

The ring die 1 is formed of a ring body having an appropriate width. The ring die 1 is rotationally supported by an apparatus main body (not shown), and is rotationally driven by a driving unit (not shown). The plurality of die cavities 4 is provided in the circumferential and width directions of the ring die 1. The die cavities 4 are each provided to pass through between the inside (inner peripheral surface) and the outside (outer circumferential surface). The bore size (diameter) of the die cavity 4 is determined according to the size (diameter) of granular plastic moldings that are to be formed through granulation. Ordinarily, the cavity is sized in a range of from 3 to 20 mm. The length (thickness of the ring die 1) is determined in consideration of the strength of the molded product, ordinarily in a range of from 30 to 150 mm.

The rollers 2a and 2b are rotationally supported by the main body of the extrusion molding machine, and are each disposed to 180° oppose the inside of the ring die 1. The rollers 2a and 2b are non-driven free rollers provided in contact with the inner peripheral surface of the ring die 1. The rollers 2a and 2b rotate in frictional engagement with the inner peripheral surface in synchronization with the rotation of the ring die 1. The number of the rollers 2 is arbitrarily determined; that is, one or three or more rollers 2 may be provided.

The cutter 3 is provided so that a cutting edge thereof is in contact with the outer circumferential surface of the ring die 1. Alternatively, the cutter 3 is provided so as to be positioned in the vicinity of the outer circumferential surface. The cutter 3 cuts molded plastics extruded in the shape of a rod to be in an appropriate length. Alternatively, the cutter 3 scrapes the molded plastics from the outer circumferential surface of the ring die 1.

In the extrusion-molding machine, the ring die 1 is rotated in the direction shown by an arrow in Fig. 2, and waste plastics are fed into the ring die 1 through an entry (not shown) when the rollers 2a and 2b are also rotated following the ring die 1. A fed waste plastics "x" is mixed by the rollers 2a and 2b, pressed into the die cavities 4 of the ring die 1 in a state the waste plastics "x" is compressed or crashed between the roller surface and the inner peripheral surface of the ring die 1. The waste plastics pressed into the die cavities 4 are passed through the die cavities 4. The waste plastics is pressed out to the outside of the ring die 1 to be rod-shaped molded pieces as shown with symbol "y". The molded plastics are cut off by the cutter 3 in a appropriate length. In this manner, granular plastic moldings "a" can be obtained.

As described below in detail, a part of the waste plastics "x" is either semi-melted or melted by frictional heat in the pelletizing step and is then solidified. In the most typical manner, a part of the waste plastics "x" is either semi-melted or melted by frictional heat against the inner surface of the die cavity 4 during passing through the die cavity 4. The semi-melted or fully melted plastics are solidified in a near-output-side region of the die cavity 4 or in the vicinity of an exit thereof. As a matter of course, the manner in which a part of the waste plastics "x" is either semi-melted or melted and then solidified is not limited to the specific one described above. For example, a part of the waste plastics "x" can be either semi-melted or melted by the rollers 2a and 2b during compressing or compressing and crashing the waste plastics. Alternatively, a cooling means is provided outside of the ring die 1, and the molded plastics "y" extruded out of the die cavities 4 in the semi-melted or melted state is cooled by the cooling means.

According to Embodiment 1, during molding and pelletizing the waste plastics by using the extrusion molding machine, the waste plastics including the solid plastics (A), which originates in molded plastics, and the at-least one plastics (B) selected from the group of thin plastics (such as filmy plastics) and foamy plastics, which originate in non-molded plastics, are fed into the inside of the ring die 1; the plastics (A) and the at-least one plastics (B) are mixed, are compressed or compressed and crashed, and are then extruded. At least a part of the plastics (B) is semi-melted or melted. At least a part of the solid plastics (A) is remained neither semi-melted nor melted. Thereby, the granular plastic moldings "a", which are formed of the plastics semi-melted or melted and then solidified and the plastics remaining neither semi-melted nor melted, is obtained. The granular plastic moldings "a" thus obtained has a significantly increased strength in comparison to the granular plastic moldings formed only by pelletizing the thin plastics such as the filmy plastics.

It is considered that the granular plastic moldings thus obtained through the granulation of the two-type plastics (A) and (B) have the high strength for the following reasons. A basic structure of the granular plastic moldings is considered to be formed such that crashed pieces of the solid plastics (A) remaining neither semi-melted nor melted individually function as "nuclei", and the at least one plastics (B) selected from the group of thin plastics and foamy plastics forms a "matrix" that functions as a binder for binding the "nuclei" with one another. A grain structure formed of the nuclei and matrix is considered to be a reason for enabling the significantly increased strength to be obtained in comparison to the granular plastic moldings formed only by pelletizing the thin plastics such as the filmy plastics.

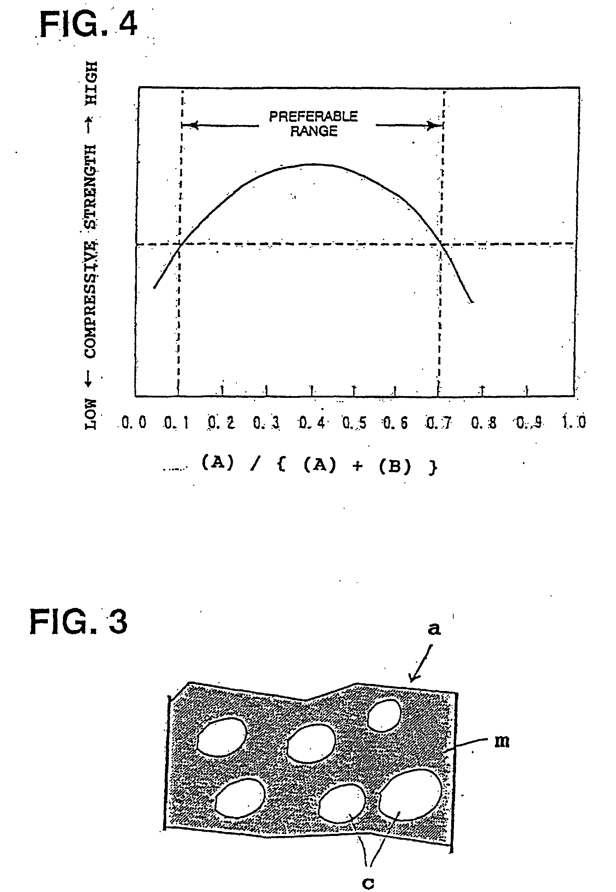

Fig. 3 schematically shows an example cross section of the granular plastic moldings "a". Referring to Fig. 3, "c" denotes a grain of the solid plastics (A) that functions as the "nucleus" of the granular plastic moldings (solid plastics remaining neither semi-melted nor melted in the pelletizing step). The letter "m" denotes plastics of the "matrix" that functions as a binder for binding the "nuclei" with one another. A part of the matrix is formed of the at-least one plastics material (B) selected from the group of thin plastics and foamy plastics that have been either semi-melted or melted and then solidified.

In the above-described pelletizing step, the construction of a pelletizer and pelletizing conditions for use can be appropriately selected to cause at least a part of the at-least one plastics material (B) to be either semi-melted or melted and to cause at least a part of the plastics material (A) to remain neither semi-melted nor melted. For example, in the extrusion molding machine shown in Figs. 1 and 2, the plastics are either semi-melted or melted primarily by heat caused by friction with a die-cavity inner peripheral surface when the plastics pass through the die cavity 4; the diameter, the length, and the like of the die cavity 4 is selected; and the rotation speed of the ring die 1 is regulated. Thereby, the extrusion amount of the plastics material (production amount) into the die cavities 4 is adjusted, thereby enabling the semi-melting or full-melting pattern of the plastics material to be arbitrarily controlled. Generally, solid plastics have a lower thermal transferability than a filmy plastics, and hence has a relatively low meltability. As such, according to appropriate selection of the construction of the pelletizer and the pelletizing conditions, at least a part of the plastics (B) can be either semi-melted or melted, at least a part of the plastics (A) can be remained neither semi-melted nor melted, and the part can be caused to exist as the "nucleus" in the granular plastic moldings "a".

The plastics (A) and (B) need to be mixed and compressed or compressed and crashed and then extruded in the mixed state. In this case, the plastics (A) and (B) may be mixed before they are fed into the pelletizer. Alternatively, the plastics (A) and (B) may be mixed using a pelletizer in which the plastics (A) and (B) are mixed. The apparatus shown in Figs. 1 and 2, can mix the plastics (A) and (B). When using the pelletizer having mixing function, the operation may be performed such that the plastics (A) and (B) premixed are fed into the pelletizer, and are then mixed in the pelletizer.

Crashing means compressing and crushing the solid plastics (A), for example. When the solid plastics (A) to be entered in the pelletizing step have a grain diameter sufficient to be the "nucleus", the solid plastics need not be crashed in the pelletizing step.

Examples of the solid plastics (A) includes not only molded plastics in the form of a plastics product, but plastics-molding scraps occurring in plastics-molding and plastics-component scraps occurring in process of molded plastics into plastic components or products or in assembly of molded plastics. The molded plastics include, for example, plastic containers (such as plastic bottles, polyethylene tanks, and cleanser containers), automobile components (such as interior articles, and bumpers), office supplies, bodies and frames of home-use electrical appliances, decorative laminated boards, pipes, hoses, magnetic cards, daily use goods and sundries (hangers, stationeries, plastic trays, plastic cups, and so forth); but the materials are not limited thereto. Waste foamy plastics, such as styrene foam, originates in a molded plastics material. However, since the foamy plastics have a low bulk density, it does not function as the "nucleus" of the granular plastic moldings. For this reason, in the present invention, the foamy plastics are not included in the category of the solid plastics (A).

Examples of the thin plastics (B) originating in the non-molded plastics include plastic films (such as PET materials, aluminum- or paper-laminated materials), plastic sheets (such as agricultural-use polyethylene sheets, construction-use sheets, packaging sheets, and PET sheets), polyethylene bags, magnetic tapes, PP bands, and packaging cushion materials). However, the thin plastics (B) is not limited to the aforementioned examples. Foamy plastics, such as styrene foam, does not function as the "nucleus", but is functions as the "matrix". For this reason, in Embodiment 1, the foamy plastics are handled as an equivalent material to the thin plastics.

Inevitably contained inorganic matters, such as paper, metal, wood, mud, and gravel, may be included in waste plastics that are to be processed according to Embodiment 1.

In Embodiment 1, the weight ratio between the solid plastics (A) in the waste plastics, which is to be fed into the ring die of the extrusion molding machine, and the at least one plastics material (B), which is selected from the group of thin plastics and foamy plastics, is preferably in a range expressed as (A)/{(A) + (B)} = 0.1 to 0.7. When the ratio (A)/{(A) + (B)} in weight is lower than 0.1, the ratio of solid components individually functioning as the "nuclei" is insufficient. On the other hand, when the weight ratio (A)/{(A) + (B)} is higher than 0.7, the amount of the "matrix" functioning as a binder that binds the "nuclei" with one another is too small. Thus, a sufficient strength cannot be obtained in either of the cases.

Based on the pelletizing results of various waste plastics, Fig. 4 is a graph showing summarized relationships between the weight ratios expressed by (A)/{(A) + (B)} and the compressive strengths of granular plastic moldings that were pelletized. In view of the strength of the obtainable granular plastic moldings "a", high compressive strengths that can withstand, for example, pneumatic transportation, were obtained in the range of the weight ratio (A)/{(A) + (B)} = 0.1 to 0.7, and preferably in a range of from 0.2 to 0.6.

When the weight ratio (A)/{(A) + (B)} is lower than 0.1, the thin plastics (B) melts conspicuously in the die cavity. On the other hand, when the weight ratio (A)/{(A) + (B)} exceeds 0.7, the ratio of the solid plastics (A) is excessively high. In either of the cases, a bridge tends to be formed in the die cavity, thereby causing the processing efficiency (productivity) to be prone to decrease.

The granular plastic moldings "a" obtained in Embodiment 1 have a sufficiently high strength. As such, the ratio in degradation of the material during handling after pelletizing and pneumatic transportation is significantly low in comparison to that of the conventional granular plastic moldings produced by pelletizing only the filmy plastics. Consequently, clogging can be prevented from occurring in a pneumatic transportation piping. More specifically, while the degradation of the conventional granular plastic moldings granulated only from the filmy plastics is at least about 10%, the degradation can be reduced to about 3% according to Embodiment 1. Moreover, the ratio in collapse of the granular plastic moldings before the feed of the granular plastic moldings into the furnace and during the feed thereof into the furnace is significantly low. The granular plastic moldings of the original size being maintained can be fed to reach a raceway of a tuyere. As such, the granular plastic moldings do not immediately dissipate from the raceway, and hence a sufficient material residence time in the raceway can be secured. This enables a high burning efficiency to be obtained.

Furthermore, the granular plastic moldings "a" obtained in Embodiment 1 have an increased bulk density in comparison to the granular plastic moldings formed only by pelletizing the thin plastics, such as the filmy plastics. Thereby, the furnace-feed amount can be increased. For example, in comparison to the bulk density of the granular plastic moldings formed only by pelletizing the filmy plastics, the bulk density can be increased by about 1.1 to 1.8 times, while it depends upon the weight ratio (A)/{(A) + (B)}.

Embodiment 1 can be implemented using not only the extrusion molding machine (pelletizer) shown in Figs. 1 and 2, but a extrusion molding machine of one of various other types capable of compressing or compressing and crashing, and extruding for the plastics. For example, the Embodiment 1 allows the use of an apparatus in which a rotational screw assembly is used to compress or crash the plastics material and to thereby press-feed the material into die cavities. In the pelletizer shown in Figs. 1 and 2, the fed plastics material may be externally heated so as to be either semi-melted or melted.

However, in comparison with other pelletizers, the extrusion molding machine shown in Figs. 1 and 2 has the following advantages and, is particularly suitable to Embodiment 1:
(1) The processing efficiency (productivity) is high;
(2) The capabilities of compressing/crashing functions (as well as the mixing function) for the waste plastics are high, thereby enabling both the hard solid plastics and the soft filmy plastics to be compressed/crashed into a relatively uniform mixture state to perform extrusion;
(3) Even the waste plastics containing foreign matters (such as paper and/or metal) can be pelletized without causing a problem;
(4) A part of the plastics material can be either semi-melted or melted using only frictional heat; and
(5) Since the temperature of the plastics in process does not excessively increase, no hydrochloric gas occurs even with the waste plastics containing a chloride-containing resin such as vinyl chloride.

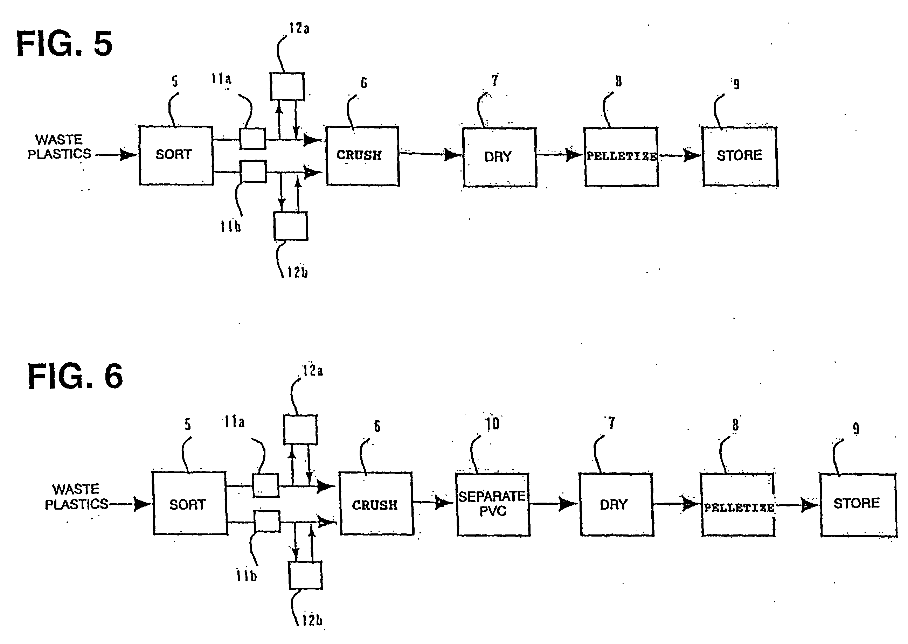

Fig. 5 shows practical processing facilities and processing steps employing the method according to Embodiment 1. The processing facilities and steps are suitable for use in the following case:
the solid plastics (A) and the thin plastics (B) are fed in a mixed state; and
the waste plastics contain a considerable amount of foreign matters such as paper and metal (for example, a foreign-matter contamination ratio of 5 to 30 wt%), and a very small amount of contaminative chloride-containing plastics such as vinyl chloride (for example, a contamination ratio of 1 wt% or lower).

In view from the procedural upstream, the processing facilities include a sorter 5, a crusher 6, a dryer 7, a extrusion molding machine 8, and a storage tank 9. The sorter 5 sorts waste plastics into the solid plastics (A) and the foamy plastics (B), and selects a portion of foreign matters such as metal included in the waste plastics. For the sorter 5, a sorter of, for example, an oscillatory method or wind-power method is used. Hereinbelow, a description will be given using a thin plastics as an example of the material (B).

In the processing facilities and the processing steps shown in Fig. 5, waste plastics mixedly including the solid plastics (A) and the thin plastics (B) is fed into the sorter 5. Therein, the waste plastics are sorted into the solid plastics (A) and the thin plastics (B), and foreign matters such as metal and mud included in the waste plastics are partially separated and removed.

The waste plastics are once sorted into the solid plastics (A) and the thin plastics (B), as described above, to facilitate subsequent manual sorting steps 11a and 11b of removing foreign matters. Specifically, foreign matters included in the waste plastics cannot be completely removed only by the sorter 5, and hence the foreign matters need to be manually sorted and removed. However, the foreign-matter removal cannot be efficiently carried out in the state where the solid plastics (A) and the plastics materials (A) and (B) mixedly exists. For this reason, the waste plastics is once separated into the solid plastics (A) and the thin plastics (B), and foreign matters individually included therein are removed in the manual sorting steps 11a and 11b. The foreign matters are mostly included in the solid plastics (A).

Both the solid plastics (A) and thin plastics (B) processed in the manual sorting steps 11a and 11b are fed into the common crusher 6, and are crushed thereby into pieces having appropriate sizes. In order to adjust the ratio of the solid plastics (A) and the plastics (B) that are to be fed into the extrusion molding machine 8, the facilities may include storage tanks 12a and 12b, as shown in Fig. 5, for temporarily storing the respective solid plastics (A) and thin plastics (B) processed in the manual sorting steps 11a and 11b. In this case, the procedure may be arranged such that, according to the ratio of the solid plastics (A) and the thin plastics (B) that are to be fed into the extrusion molding machine 8, the solid plastics (A) and the thin plastics (B) are temporarily stored into the storage tanks 12a and 12b; or alternatively, the solid plastics (A) and the thin plastics (B) are fed from the storage tanks 12a and 12b into the crusher 6.

The waste plastics, which are a mixture of the solid plastics (A) and the thin plastics (B) that have been crushed by the crusher 6, is fed into the dryer 7, and the mixture is dried therein to have a predetermined moisture content (for example, 20 wt% or lower). Then, the dried mixture is fed into the extrusion-molding machine 8, and is pelletized therein, thereby enabling granular plastic moldings "a" as described above to be obtained. The granular plastic moldings "a" are stored into the storage tank 9 as an injection raw material.

In the above-described processing facilities, two or more crushers 6 may be provided in series according to required plastic grain sizes. Moreover, to protect the crusher 6, a facility such as a magnetic sorter or a wind-power sorter for removing foreign matters may be provided upstream of the manual sorting steps 11a and 11b. Alternatively, the aforementioned facility may be provided upstream of the crusher 6. Still alternatively, when a plurality of crushers are provided in series, the aforementioned facility may be provided between the crushers.

Fig. 6 shows another practical processing facilities and processing steps employing the method according to Embodiment 1. The processing facilities and steps are suitable for use in a case where the solid plastics (A) and the thin plastics (B) are mixed and are fed in the mixed state; and the waste plastics contain a considerable amount of foreign matters such as paper and metal (for example, a foreign-matter contamination ratio of 5 to 30 wt%), and in addition, a considerable amount of contaminative chloride-containing plastics materials such as vinyl chloride (for example, a contamination ratio of 1 wt% or higher).

In view from the procedural upstream, the processing facilities include a sorter 5, a crusher 6, a PVC separator 10, a dryer 7, a extrusion molding machine 8, and a storage tank 9. The sorter 5 is the same as that shown in Fig. 5. The PVC separator 10 uses, for example, gravity separation, and thereby separates and removes a chloride-containing plastic material such as vinyl chloride included in the waste plastics.

In the processing facilities and the processing steps shown in Fig. 6, waste plastics mixedly including the solid plastics (A) and the thin plastics (B) are fed into the sorter 5. Therein, the waste plastics are sorted into the solid plastics (A) and the thin plastics (B), and foreign matters such as metal included in the waste plastics are partially separated and removed. As in the method shown in Fig. 5, the foreign matters such as metal are separated and removed in manual sorting steps 11a and 11b.

Both the solid plastics (A) and thin plastics (B) processed in the manual sorting steps 11a and 11b are fed into the common crusher 6, and are crushed thereby into pieces having appropriate sizes. Similar to the case shown in Fig. 5, the facilities may include storage tanks 12a and 12b for temporarily storing the respective solid plastics (A) and thin plastics (B). In this case, the procedure may be arranged such that, according to the ratio of the solid plastics (A) and the thin plastics (B) that are to be fed into the extrusion molding machine 8, the solid plastics (A) and the thin plastics (B) are temporarily stored into the storage tanks 12a and 12b; or alternatively, the solid plastics (A) and the thin plastics (B) are fed from the storage tanks 12a and 12b into the crusher 6.

The waste plastics, which is a mixture of the solid plastics (A) and the thin plastics (B) that have been crushed by the crusher 6, are processed by the PVC separator 10 so that a chloride-containing plastic material such as vinyl chloride is separated and removed therefrom. Subsequently, the mixture is fed into the dryer 7 and is dried therein to have a predetermined moisture content (for example, 20 wt% or lower). Then, the dried mixture is fed into the extrusion-molding machine 8, and is granulated therein, thereby enabling granular plastic moldings "a" as described above to be obtained. The granular plastic moldings are stored into the storage tank 9 as an injection raw material.

In the above-described processing facilities, two or more crushers 6 may be provided in series according to required plastic grain sizes. Moreover, to protect the crusher 6, a facility such as a magnetic sorter or a wind-power sorter for removing foreign matters may be provided upstream of the manual sorting steps 11a and 11b. Alternatively, the aforementioned facility may be provided upstream of the crusher 6. Still alternatively, when a plurality of crushers are provided in series, the aforementioned facility may be provided between the crushers.

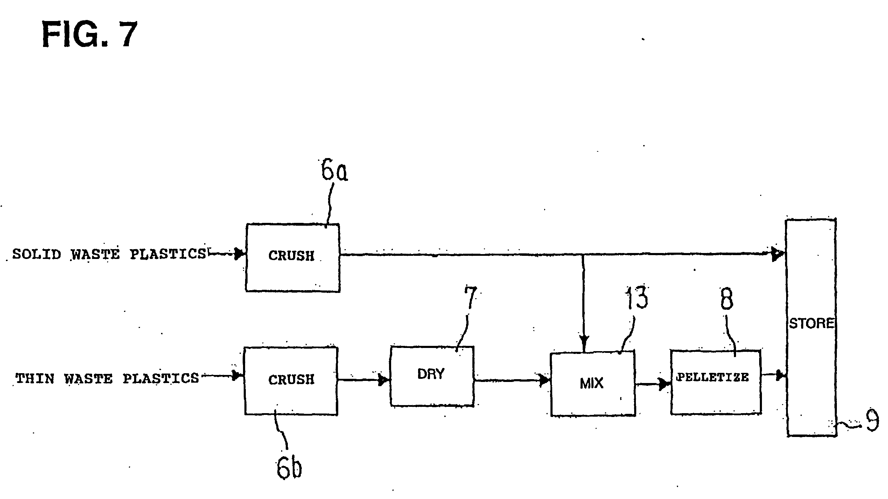

Fig. 7 shows another practical example of processing facilities and processing steps employing the method according to Embodiment 1. The processing facilities and steps are suitable for use in a case where the solid plastics (A) and the thin plastics (B) are separately fed; and the waste plastics almost do not contain foreign matters such as paper and metal (for example, a foreign-matter contamination ratio of 5 wt% or lower), and a very small amount of contaminative chloride-containing plastics materials such as vinyl chloride (for example, a contamination ratio of 1 wt% or lower).

In view from the procedural upstream, the processing facilities include crushers 6a and 6b for crushing the respective solid plastics (A) and thin plastics (B), a dryer 7 for drying a crushed material of the thin plastics (B), a mixing tank 13 for the individual crushed materials of the solid plastics (A) and the thin plastics (B), a extrusion molding machine 8, and a storage tank 9.

In the processing facilities and the processing steps shown in Fig. 7, the solid plastics (A) and the thin plastics (B) are crushed by the respective crushers 6a and 6b into predetermined grain diameters. After the thin plastics (B) has been crushed by the crusher 6b, a crushed material thereof is fed into the dryer 7, is dried therein to have a predetermined moisture content (for example, 20 wt% or lower), and is then fed into the mixing tank 13. On the other hand, after the solid plastics (A) is crushed by the crusher 6a, a crushed material thereof is fully or partially fed into the mixture tank 13 so that the ratio expressed in weight ratio to the thin plastics (B), i.e., (A)/{(A) + (B)}, is ranged from 0.1 to 0.7, or preferably, 0.2 to 0.6. If a surplus crushed material of the solid plastics (A) exists, the crushed material is directly fed into the storage tank 9 and is stored therein as an injection raw material.

The individual crushed materials of the solid plastics (A) and the thin plastics (B) are mixed in the mixing tank 13, and a mixture of the plastic crushed materials is granulated by the extrusion molding machine 8, and granular plastic moldings a as described above can be obtained. Thereafter, the granular plastic moldings "a" are stored as, for example, an injection raw material, into the storage tank 9.

For example, when using an extrusion-molding machine 8 having a feeding hopper, the individual crushed material of the solid plastics (A) and the thin plastics (B) may be directly mixed in the feeding hopper. In this case, the mixing tank 13 may be omitted.

Generally, a crushed material of the solid plastics (A) has a low adherent moisture content. However, in a case where a crushed material of the solid plastics (A) has a high moisture content (for example, 20 wt% or higher), the arrangement may be made such that the mixing tank 13 is disposed upstream of the dryer 7 to enable crushed materials of both the solid plastics (A) and the thin plastics (B) to be dried.

In the above-described processing facilities, two or more units of the individual crushers 6a and 6b may be provided in series according to required plastic grain sizes. Moreover, to protect the crusher 6a, 6b, a facility such as a magnetic sorter or a wind-power sorter for removing foreign matters may be provided upstream of the crusher 6a,6b. Alternatively, when a plurality of crushers are provided in series, the aforementioned facility may be provided between the crushers.

Moreover, when the foreign-matter contamination ratio is high (for example, 5 wt% or higher), to protect, for example, the crusher 6a, 6b and the extrusion molding machine 8, a facility such as a magnetic sorter, a wind-power sorter, or a manual sorting conveyor for removing foreign matters is preferably provided upstream of the crusher. Alternatively, when a plurality of crushers are provided in series, the aforementioned facility is preferably provided between the crushers.

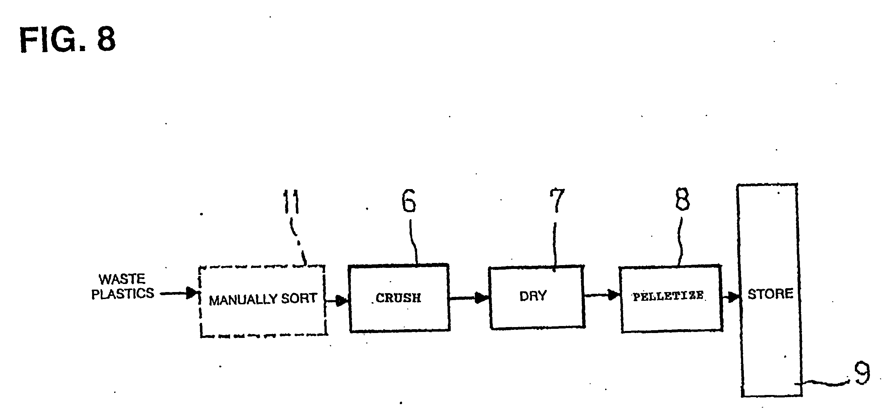

Fig. 8 shows another practical example of processing facilities and processing steps employing the method of the Embodiment 1. The processing facilities and steps are suitable for use in a case where the solid plastics (A) and the thin plastics (B) are fed in a mixed state satisfying the condition in which the weight ratio (A)/{(A) + (B)} is ranged from 0.1 to 0.7; and the waste plastics almost do not contain foreign matters such as metal and paper (for example, a foreign-matter contamination ratio of 5 wt% or lower), and a very small amount of contaminative chloride-containing plastics materials such as vinyl chloride (for example, a contamination ratio of 1 wt% or lower).

In view from the procedural upstream, the processing facilities include crushers a manual sorting step 11, a crusher 6, a dryer 7, a compressive molding apparatus 8, and a storage tank 9.

In the processing facilities and the processing steps shown in Fig. 8, fed waste plastics are subjected to the manual sorting step 11, and large foreign matters are removed by the step from the waste plastics. Subsequently, the waste plastics are crushed by the crusher 6 into a predetermined grain diameter, are dried by the dryer 7 to have a predetermined moisture content (for example, 20 wt% or lower), and are granulated by the compressive molding apparatus 9. Then, granular plastic moldings are stored as an injection raw material.

In the above-described processing facilities, two or more crushers 6 may be provided in series according to required plastic grain sizes. Moreover, to protect the crusher 6, a facility such as a magnetic sorter or a wind-power sorter for removing foreign matters may be provided upstream of the crusher 6. Alternatively, when a plurality of crushers are provided in series, the aforementioned facility may be provided between the crushers.

Moreover, when the foreign-matter contamination ratio is high (for example, 5 wt% or higher), to protect, for example, the crusher 6 and the compressive molding apparatus 8, a facility such as a magnetic sorter, a wind-power sorter, or a manual sorting conveyor for removing foreign matters is preferably provided upstream of the crusher. Alternatively, when a plurality of crushers are provided in series, the aforementioned facility is preferably provided between the crushers.

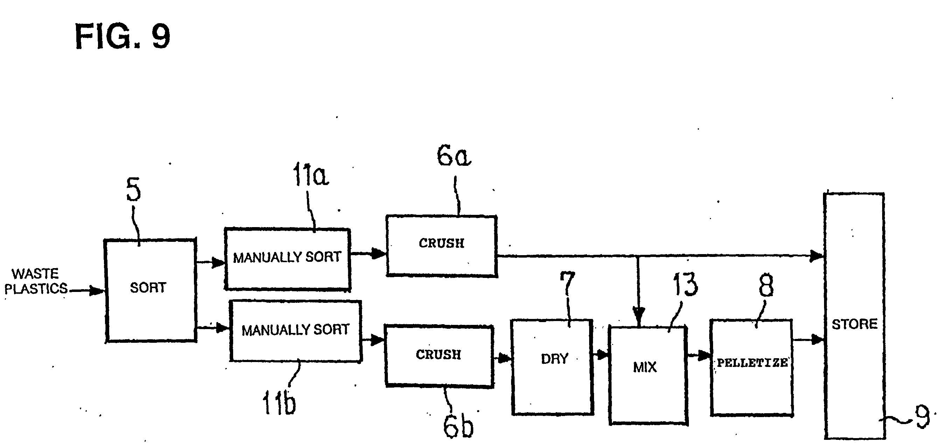

Fig. 9 shows another practical example of processing facilities and processing steps employing the method of the present invention. The processing facilities and steps are suitable for use in a case where the solid plastics (A) and the thin plastics (B) are fed in a mixed state; and the waste plastics contain a considerable amount of foreign matters such as metal and paper (for example, a foreign-matter contamination ratio of 5 to 30 wt%), and a very small amount of contaminative chloride-containing plastics materials such as vinyl chloride (for example, a contamination ratio of 1 wt% or lower).

In view from the procedural upstream, the processing facilities include a sorter 5, manual sorting steps 11a and 11b for manually sorting the respective solid plastics (A) and thin plastics (B), crushers 6a and 6b for crushing the respective solid plastics (A) and thin plastics (B), a dryer 7 for a crushed material of the thin plastics (B), a mixing tank 13 for individual crushed materials of the solid plastics (A) and the thin plastics (B), a compressive molding apparatus 8, and a storage tank 9.

The sorter 5 is the same as one of those shown in Figs. 5 and 6. The waste plastics fed into the sorter 5 are sorted into the solid plastics (A) and the thin plastics (B), and concurrently, foreign matters such as metal, mud, and/or the like included in the waste plastics are partially removed. Thereafter, similar to one of the cases shown in Figs. 5 and 6, foreign matters such as meal included in the individual waste plastics are removed in the manual sorting steps 11a and 11b.

The respective solid plastics (A) and thin plastics (B) processed in the manual sorting steps 11a and 11b are crushed by the respective crushers 6a and 6b into pieces having predetermined grain diameters. On the one hand, a crushed material of the thin plastics (B) is then fed into the dryer 7, is dried therein to have a predetermined moisture content (for example, 20 wt% or lower), and is then fed into the mixing tank 13. On the other hand, the solid plastics (A) having been crushed by the crusher 6a is fully or partially fed into the mixture tank 13 so that the ratio (weight ratio) to the thin plastics (B) satisfies the condition of (A)/{(A) + (B)} = 0.1 to 0.7, or preferably, 0.2 to 0.6. If a surplus crushed material of the solid plastics (A) exists, the crushed material is directly fed into the storage tank 9 and is stored therein as a furnace-injection raw material.

The individual crushed materials of the solid plastics (A) and the thin plastics (B) are mixed in the mixing tank 13, and a mixture of the plastic crushed materials is granulated by the extrusion molding machine 8, and granular plastic moldings a as described above can be obtained. Thereafter, the granular plastic moldings a are stored as, for example, an injection raw material, into the storage tank 9.

For example, when using an extrusion-molding machine 8 having a feeding hopper, the individual crushed material of the solid plastics (A) and the thin plastics (B) may be directly mixed in the feeding hopper. In this case, the mixing tank 13 may be omitted.

Generally, a crushed material of the solid plastics (A) has a low adherent moisture content. However, in a case where a crushed material of the solid plastics (A) has a high moisture content (for example, 20 wt% or higher), the arrangement may be made such that the mixing tank 13 is disposed upstream of the dryer 7 to enable crushed materials of both the solid plastics (A) and the thin plastics (B) to be dried.

In the above-described processing facilities, two or more units of the individual crushers 6a and 6b may be provided in series according to required plastic grain sizes. Moreover, to protect the crusher 6a, 6b, a facility such as a magnetic sorter or a wind-power sorter for removing foreign matters may be provided upstream of the manual sorting steps 11a, 11b. Alternatively, when a plurality of crushers are provided in series, the aforementioned facility may be provided between the crushers.

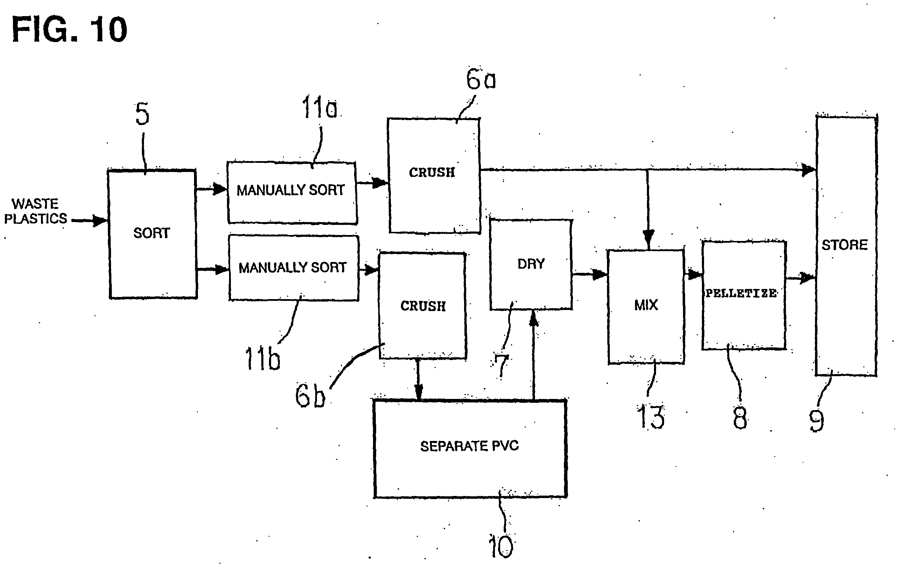

Fig. 10 shows another practical example of processing facilities and processing steps employing the method of the present invention. The processing facilities and steps are suitable for use in a case where the solid plastics (A) and the thin plastics (B) are fed in a mixed state; and the waste plastics contain a considerable amount of foreign matters such as metal and paper (for example, a foreign-matter contamination ratio of 5 to 30 wt%), and in addition, a considerable amount of contaminative chloride-containing plastics materials such as vinyl chloride (for example, a contamination ratio of 1 wt% or higher).

In view from the procedural upstream, the processing facilities include a sorter 5, manual sorting steps 11a and 11b for manually sorting the respective solid plastics (A) and thin plastics (B), crushers 6a and 6b for crushing the respective solid plastics (A) and thin plastics (B), a PVC separator 10, a dryer 7 for a crushed material of the thin plastics (B), a mixing tank 13 for individual crushed materials of the solid plastics (A) and the thin plastics (B), a compressive molding apparatus 8, and a storage tank 9.

The sorter 5 is the same as one of those shown in Figs. 5 and 6, and the PVC separator 10 is the same as that shown in Fig. 6. The waste plastics fed into the sorter 5 is sorted into the solid plastics (A) and the thin plastics (B), and concurrently, foreign matters such as metal, mud, and/or the like included in the waste plastics are partially removed. Thereafter, similar to one of the cases shown in Figs. 5 and 6, foreign matters such as meal included in the individual waste plastics are removed in the manual sorting steps 11a and 11b.

The respective solid plastics (A) and thin plastics (B) processed in the manual sorting steps 11a and 11b are crushed by the respective crushers 6a and 6b into pieces having predetermined grain diameters. On the one hand, a crushed material of the thin plastics (B) is then fed into the dryer 7, is dried therein to have a predetermined moisture content (for example, 20 wt% or lower), and is then fed into the mixing tank 13. On the other hand, the solid plastics (A) having been crushed by the crusher 6a is fully or partially fed into the mixture tank 13 so that the ratio (weight ratio) to the thin plastics (B) satisfies the condition of (A)/{(A) + (B)} = 0.1 to 0.7, or preferably, 0.2 to 0.6. If a surplus crushed material of the solid plastics (A) exists, the crushed material is directly fed into the storage tank 9 and is stored therein as a furnace-injection raw material.

The individual crushed materials of the solid plastics (A) and the thin plastics (B) are mixed in the mixing tank 13, and a mixture of the plastic crushed materials is granulated by the extrusion molding machine 8, and granular plastic moldings a as described above can be obtained. Thereafter, the granular plastic moldings "a" are stored as, for example, an injection raw material, into the storage tank 9.

For example, when using an extrusion molding machine 8 having a feeding hopper, the individual crushed material of the solid plastics (A) and the thin plastics (B) may be directly mixed in the feeding hopper. In this case, the mixing tank 13 may be omitted.

Generally, a crushed material of the solid plastics (A) has a low adherent moisture content. However, in a case where a crushed material of the solid plastics (A) has a high moisture content (for example, 20 wt% or higher), the arrangement may be made such that the mixing tank 13 is disposed upstream of the dryer 7 to enable crushed materials of both the solid plastics (A) and the thin plastics (B) to be dried.

In the above-described processing facilities, two or more units of the individual crushers 6a and 6b may be provided in series according to required plastic grain sizes. Moreover, to protect the crusher 6a, 6b, a facility such as a magnetic sorter or a wind-power sorter for removing foreign matters may be provided upstream of the manual sorting step 11a,11b or upstream of crusher 6a,6b. Alternatively, when a plurality of crushers are provided in series, the aforementioned facility may be provided between the crushers.

In addition, since an ordinary solid plastics (A) has a very low content of chloride-containing plastic material (ordinarily, the content is 1 wt% or lower), the solid plastics (A) need not be processed using the PVC separator 10. However, when using the solid plastics (A) having a high content of the chloride-containing plastic material, the mixing tank 13 may be disposed upstream of the PVC separator 10. In this case, the individual crushed materials of the solid plastics (A) and the thin plastics (B) are fed into the mixing tank 13; and thereafter, the mixture is processed by the PVC separator 10 to remove the chloride-containing plastic material.

In the processing facilities shown Figs. 5 to 10, transportation conveyor, pneumatic transportation pipes, and the like are used to perform inter-apparatus transportation for the granular plastic moldings "a".

The granular plastic moldings a obtainable by preliminary processes the waste plastics according to the method of the present invention can be used as, for example, an injection raw material for various furnaces and a solid raw fuel material. Examples of the solid raw fuel material include, for example, a raw fuel material for a coke oven, but the solid raw fuel material can be used for other arbitrary purposes. In any of the cases, since the material has a high strength, collapse (pulverization) can be appropriately prevented from occurring while the material is handled or used.

### EXAMPLE 1

Waste-plastics preliminary processes were performed according to present-invention example methods and a comparative example method (conventional method) by using a pelletizer shown in Figs. 1 and 2.

In the present example, the pelletizer is characterized as die-ring inner diameter: 840 mm; die-ring width: 240 mm; die-ring thickness (die-cavity length): 60 mm; roller diameter: 405 mm; die-cavity diameter: 6 mm; number of die cavities: 10,000. Solid plastics (A) and thin plastics (B) (filmy plastics) were fed at a total speed ranged from 1.0 to 1.5 t/h. The thin plastics (B) is composed of polyethylene 32 wt%, polypropylene 31 wt%, polystyrene 22 wt%, and others (such as paper) 15 wt%. The solid plastics (A) is composed of polyethylene 37 wt%, polypropylene 34 wt%, polystyrene 22 wt%, and others (such as paper) 7 wt%.

Table 1 shows the results of the present-invention examples and the comparative example. In the table, the values representing the properties of strength, productivity, and bulk density are individually shown on the basis of 100 set to each of the properties of the comparative example. As shown in the table, remarkable results were observed.

**Table 1**

| | | Example 1 | Example 2 | Example 3 | Comparative example 1 |
|---|---|---|---|---|---|
| Materials | Solid plastics | 20 % | 40 % | 60 % | 0 |
| | Filmy plastics | 80 % | 60 % | 40 % | 100 % |
| Bulk density | | 128 | 157 | 118 | 100 |
| Strength | | 143 | 177 | 121 | 100 |
| Productivity | | 124 | 144 | 151 | 100 |

### EXAMPLE 2

Waste-plastics preliminary processes were performed for various materials according to the processing flows shown in Figs. 7 to 10 by using the pelletizer shown in Figs. 1 and 2 in which the die-ring construction was varied (for the die-cavity diameter and length). That is, the construction of the pelletizer used is substantially the same as that used in Example 1, except for those shown in Table 2.

Table 2 shows bulk densities of pelletized plastics materials, degradation ratio, and processing rates in association with the contents of processed waste plastics.

It should be understood from the table that granular plastic moldings each having a high strength can be obtained through the preliminary processes implemented employing the conditions of the present invention.

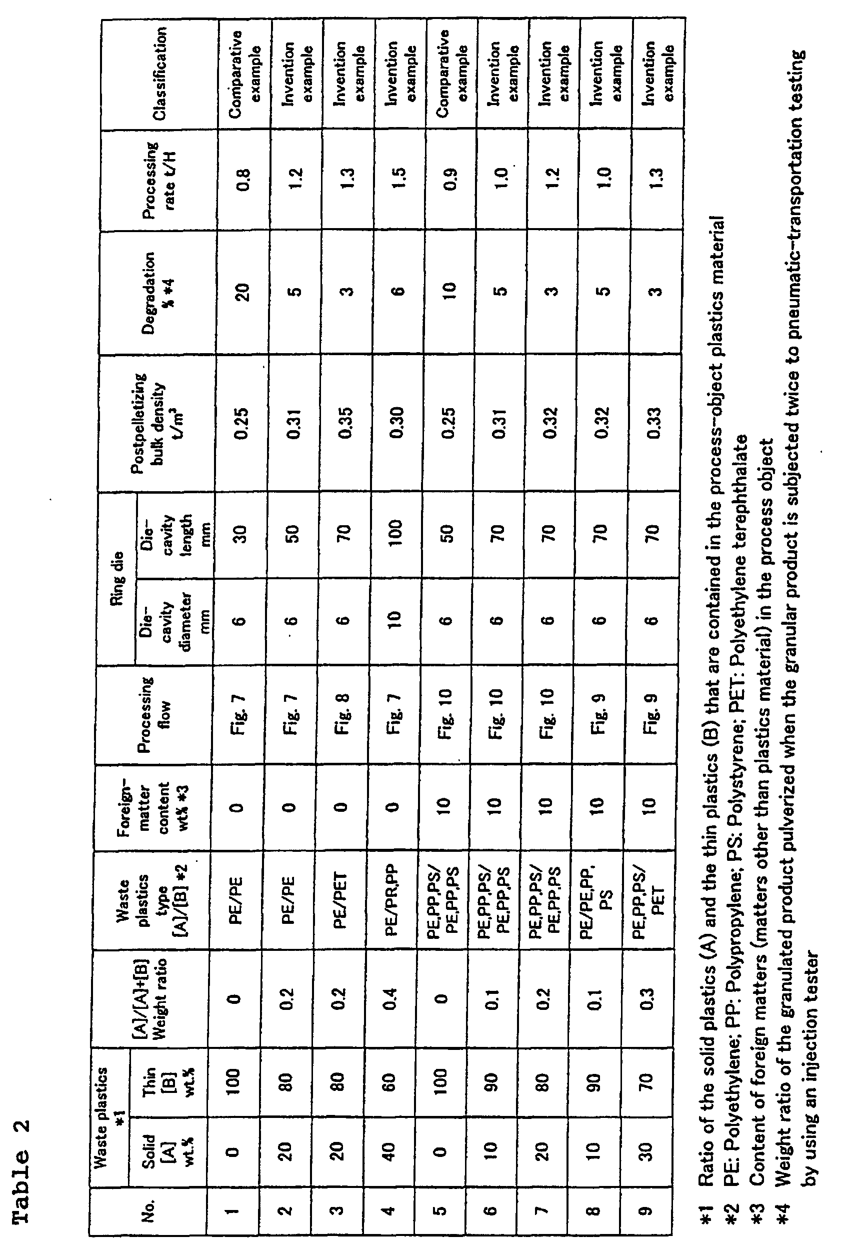

### EMBODIMENT 2

The inventors found that only controlling one of the grain strength and the grain diameter is not sufficient to improve the burning rate in a race way of a furnace. For example, according to the aforementioned control, the pellets cannot be fed to reach inside of the raceway; and even when the pellets can be fed to reach the raceway, the pellets are broken/collapsed while it is dispersed in hot air, thereby reducing the burning rate. From the above, it was found that the burning rate of the pellets can be improved by controlling both the strength and grain diameter of the pellets. Specifically, for injection to the furnace, the strength of the pellets is controlled so that the pellets can reach a predetermined zone in the furnace raceway; and the grain diameter of the pellets is controlled sufficient to be fed at a flow rate not lower than a limiting flow rate.

In addition, the inventors found the following. Using the ring-die pelletizer capable of grinding and compressively extruding a raw material, pellets containing a synthetic resin material and having a melt-solidified surface are produced through control to have the strength and grain diameter in specified ranges as in the above-described manner. In this case, the pellets are formed such that unmelted components such as paper are consolidated to form a central portion, and melted components are melt-solidified. When the pellets thus produced are injected to a furnace-injection tuyere, the pellets can be fed to reach a predetermined zone of the raceway without causing fluffy foreign matters that can cause clogging in a tank and/or a piping, and in addition, the pellets can be efficiently burned.

Hereinbelow, a detailed description will be made regarding the pellets containing the synthetic resins and having the melt-solidified surface, and a type of a production method for the pellets.

The pellets containing the synthetic resin material and having the melt-solidified surface according to Embodiment 2, is controlled to have a strength so as to reach a predetermined zone in a furnace raceway and to have a grain size so as to be fed at a velocity not lower than a limiting velocity for injection into the furnace.

The grain strength and the grain diameter are important factors for the pellets of Embodiment 2. As such, high importance needs to be placed on control of the grain strength and the grain diameter to be within predetermined ranges. The grain strength needs to be controlled not only for transportation, but also for the prevention of the grain from being degraded in the raceway (as described below). In addition, since the velocity of the grain to be injected the furnace is influenced depending on the shape, the grain needs to be shaped to provide the limiting velocity.

For the conventional pellets, control of the grain strength and the grain diameter is difficult. However, the situation is different when an pellets is formed using a pelletizer that includes a ring die including a plurality of through-cavities and a roller disposed inside of the ring die for crashing and compressively extruding a prepared raw material. The produced pellets offers a high selection flexibility in the grain diameter and grain strength. In addition, a plurality of materials each having a different melting point can be pelletized; and moreover, an unmeltable material (such as paper) can be pelletized.

For the pellets containing the synthetic resin material and having the melt-solidified surface according to Embodiment 2, the grain strength is controlled so that the pellets can be fed to reach a predetermined zone in the furnace raceway. Specifically, the grain strength is controlled to be a compressive strength represented as an average strength index (δ) ≥ 500, where δ = Σδiωi (δi = ratio between a load (kg) and a displacement (mm) when a vertical load is applied to the grain; and ωi = weight ratio).

The strength and diameter of the pelletized grains are closely related to the conversion ratio in a furnace. When the strength is higher or equal to a predetermined compressive strength (that is, the compressive hardness), and the grain diameter is larger or equal to a predetermined grain diameter, the conversion ratio in the furnace is high.

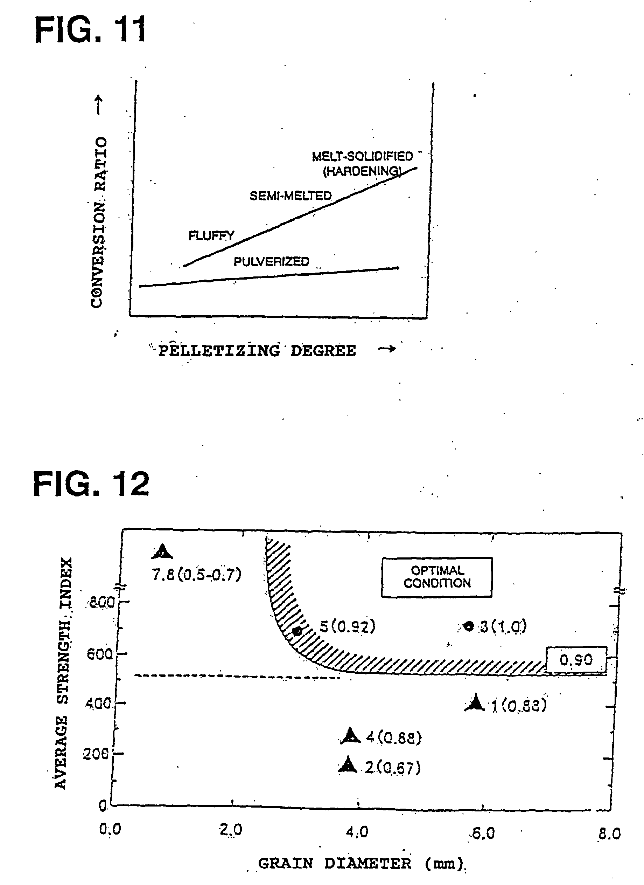

Fig. 11 is a diagram showing the relationship between the pelletizing degree (grain diameter and strength) and conversion ratio. As shown in Fig. 11, when the pelletizing degree (grain diameter and strength) is small, the pellets is in a fluffy state; and as the pelletizing degree (grain diameter and strength) increases, the state changes to a semi-melted state and a melt-solidified state. Accordingly, it can be known that the conversion ratio increases in proportion to the increase in the pelletizing degree.

When the grain strength is a compressive strength represented as an average strength index (kg/mm) of 500 or a higher, the grains can be fed into the raceway at a high production yield, and an average grain residence time in the raceway can be increased to improve the burning rate. However, when the average strength index is lower than 500, the pellets is abruptly heated by hot air immediately after blown from a lance, grains are degraded by, for example, breakup and collapse. This increases the ratio of degraded grains flying out of the raceway together with a gas flow, thereby reducing the burning rate.

In Embodiment 2, it is important not only to maintain the grain strength within the above-described range, but also to control the grain diameter to be within a predetermined range. Specifically, the grain diameter is controlled to have a value not smaller than (3 × d² × t/2)^{1/3} (where d = diameter of the pellets; and t = length of the pellets) so that the pellets can be fed at a velocity not lower than a limiting velocity thereof.

The grain terminal velocity is required to be higher than gas velocity flow rate at a raceway boundary. A lower limit of grain diameters satisfying the above condition is represented by a value of (3 × d² × t/2)^{1/3}.

Fig. 12 is a diagram showing the relationship between the average strength index, the pellet grain diameter, and the conversion ratio according to Embodiment 2. In Fig. 12, the vertical axis represents the average strength index, and the horizontal axis represents the grain diameter. A region where the conversion ratios are 90% or higher is shown as an optimal condition, of which a boundary portion being enclosed by slanting lines. In Fig. 12, black circles (●) individually represent pellets of Embodiment 2, and black triangles (▲) individually represent conventional pellets. As are apparent from Fig. 12, regarding a sample 1, while the grain diameter is about 6.0 mm, the average strength index is about 400, and the conversion ratio is confined to 0.88. Regarding sample 7 and 8, which are pellets molded according to the conventional melting-granulation method, while the average strength index exceeds 800, the pellets are poor since the grain diameter is smaller than 2.0mm, and the conversion ratio is ranged from 0.5 to 0.7. As such, to obtain a conversion ratio 90% or higher, it is insufficient to control only one factor of the strength and grain size of the pellets to be satisfactory, and both the strength and grain diameter of the pellets need to be controlled to satisfy the predetermined ranges.

As already described, in the production method for the pellets containing the synthetic resin the materials and having the melt-solidified surface according to Embodiment 2 is produced by using the pelletizer, which includes the ring die having the plurality of through-cavities and the roller disposed inside of the ring die, for crashing and compressively extruding a prepared raw material. In this case, the production method controls the grain strength and the grain diameter to be within the above-described ranges. When T represents the effective thickness of the ring die in the pelletizer, and d represents the diameter of the above-mentioned through-cavity therein, T/d is required to be ranged from 6 to 12. To perform hardening granulation, T/d is required to be ranged from 6 to 8; and to perform semi-melt-solidifying granulation, T/d is required to fall in a range of from 10 to 12.

In addition, the adherent moisture content of the raw material is required to be 5% or lower in the production method for the pellets containing the synthetic resin the materials and having the melt-solidified surface according to Embodiment 2.

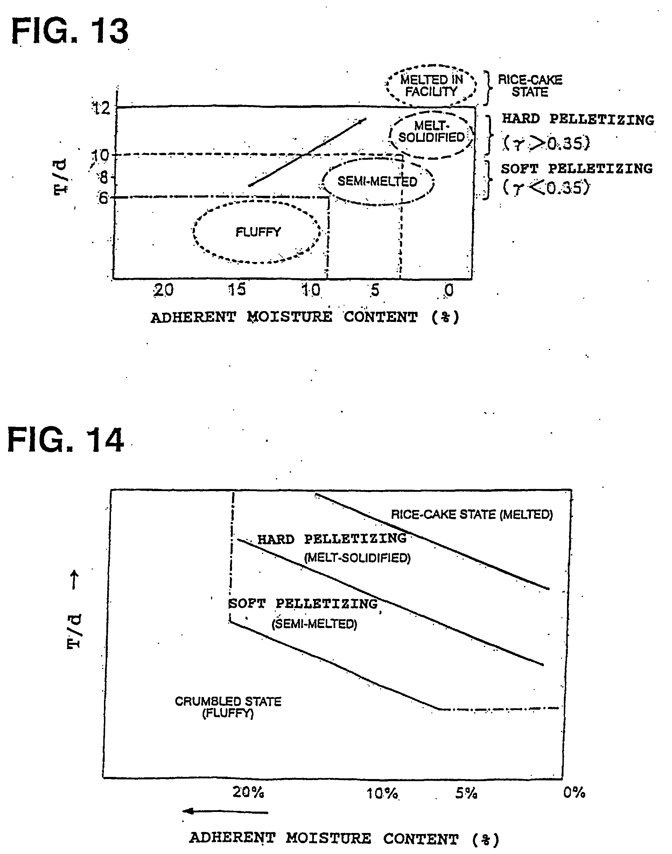

Fig. 13 is a diagram showing the relationship among T/d, the adherent moisture content, and the pelletizing degree. In Fig. 13, the vertical axis represents the T/d value (T represents the effective thickness of the ring die, and d represents the diameter of the through-cavity). The horizontal axis represents the raw-material adherent moisture content. As shown by an arrow in Fig. 13, as the T/d value increases, and the adherent moisture content decreases, the pellets changes to a fluffy state, a semi-melted state (soft-granulated; γ: 0.35 or higher), a melt-solidified state (hard-granulated; γ: lower than 0.35). In the above, γ represents the bulk density.

Furthermore, Fig. 14 shows the relationship between T/d and the adherent moisture content in detail.

As is apparent from Fig. 13, when T/d exceeds 12, the pellets melts in the pelletizer and becomes in a so-called rice-cake state. When T/d is lower than 6, the pellets becomes in a fluffy state. When T/d is in a range of from 6 to 8, the pellets becomes in a semi-melted (soft-granulated) state. In this case, the adherent moisture content is preferably lower than 5%. When T/d is in a range of from 10 to 12, the pellets becomes in a melt-solidified (hard-granulated) state. Also in this case, the adherent moisture content is preferably 5% or lower.

From the above description, it should be understandable that the state of the pellets can be flexibly selected by controlling the effective thickness T of the ring die, the diameter d of the through-cavity, and the raw-material adherent moisture content.

In addition, in the production method for the pellets containing the synthetic resin materials and having the melt-solidified surface according to Embodiment 2, the size of the prepared raw material is such that when the raw-material grain size is represented by D, a ratio thereof with respect to the diameter d of the through-cavity, i.e., D/d, is in a range of from 1.2 to 3.0.

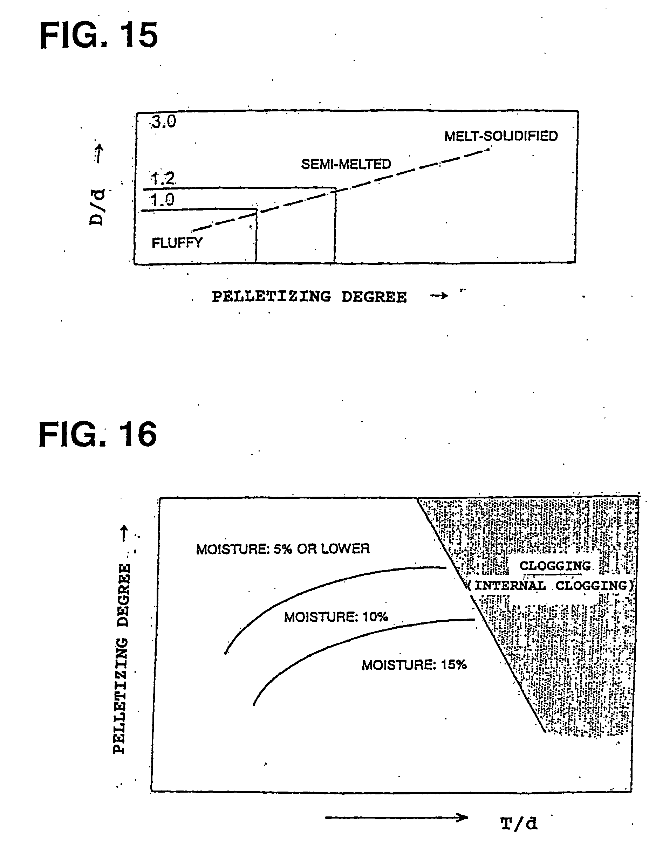

Fig. 15 is a diagram showing the relationship between D/d and the pelletizing degree according to Embodiment 2. As shown in Fig. 15, as D/d increases, the state as the pelletizing degree changes to a fluffy state, a semi-melted state (soft-granulated state), and a melt-solidified state (hard-granulated state). D/d is controlled to be in a range of from 1.2 to 3.0 to cause the pellets to be in the semi-melted state (soft-granulated state) or the melt-solidified state (hard-granulated state). When D/d is lower 1.2, since the pellets becomes in the fluffy state, it is not preferable. When D/d exceeds 3.0, the resistance increases, thereby reducing the practicability.

From the above description, it should be understandable that when the raw-material size is relatively increased, the state of the pellets becomes in the preferable semi-melted state (soft-granulated state) or melt-solidified state (hard-granulated state).

The production method for the pellets containing the synthetic resin material and having the melt-solidified surface according to Embodiment 2 may further include a step of drying the raw material and thereby regulating the adherent moisture content of the raw material to be 5% or lower. The raw material is dried by a heating and flash drying method.

Fig. 16 shows the relationship between the moisture adhesion content and the granulation strength according to Embodiment 2. As shown in Fig. 16, the granulation strength can be improved by controlling the T/d value to be within the predetermined range and by regulating the adherent moisture content to be 5% or lower.

Furthermore, in the production method for the pellets containing the synthetic resin material and having the melt-solidified surface according to Embodiment 2, the temperature at an exit of the pelletizer that has performed granulation for the pellets is 100°C or higher, in which the pelletizer includes the ring die having the plurality of through-cavities and the roller disposed inside of the ring die for crashing and compressively extruding a prepared raw material. Managing the temperature of the pelletizing die enables the degrees of melting and granulation to be controlled.

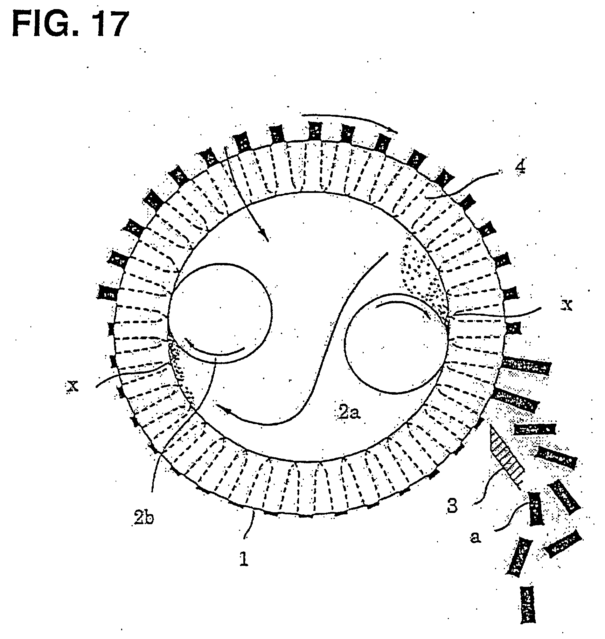

Fig. 17 shows a cross-sectional outline of the pelletizer according to the above-described invention. The pelletizer of this invention includes a ring die 1 including a plurality of die cavities 4 and rollers 2a and 2b provided inside of the ring die 1. The ringular die 1 and the rollers 2a and 2b individually rotate. A raw material X delivered into the ring die is ground by the ringular die 1 and the rollers 2a and 2b, and is compressively extruded outside of the ringular die 1 through the plurality of die cavity 4. Then, the extruded material is cut into a predetermined length by using a cutter 3 that is disposed at a predetermined position in the outside of the ringular die 1. In this manner, an pellets a is produced.

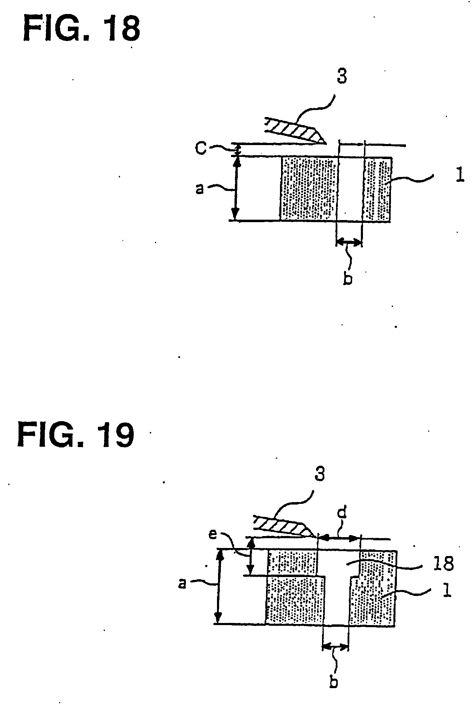

Figs. 18 and 19 each show an example relationship among a cutter, the thickness of a die, the diameter of a cavity of the die, and the length of the pellets according to Embodiment 2. Fig. 18 shows the die in which the die-cavity diameters from the inner side through to the outer side are the same. In each of Figs. 18 and 19, the die outer side is shown on the upside of the figure, and the die inner side is shown downside of the figure. Referring to Fig. 18, a die 1 has a thickness a, and a plurality of the cavities each having a diameter b. A cutter 3 is set at a predetermined spacing c on the outside of the die 1. In this case, the length of the pellets (granulated product) is the same as c. Fig. 19 shows a die in which the cavity includes a relief portion. The die, shown by numeral 1, has a thickness a. In the die 1, each of the plurality of cavities has a predetermined length portion of a diameter b, and the remaining length portion, specifically, a relief 18, having a diameter d. The cutter 3 is set at a predetermined spacing in the outside of the die 1. In this case, the length of the pellets (granulated product) is represented by e.

In addition, a step of quickly cooling the pellets may be included in the production method for the pellets containing the synthetic resin material and having the melt-solidified surface according to Embodiment 2. In this case, after granulation, the quick cooling is applied to cool the pellets to a temperature of 40°C or lower by using, for example, a pellet cooler. The quick cooling is applied for the purpose of solidifying the pellets in the granulated state.

In the production method for the pellets containing the synthetic resin material and having the melt-solidified surface according to Embodiment 2, the synthetic resin may contain paper-containing filmy plastics.

In the production method for the pellets containing the synthetic resin material and having the melt-solidified surface according to the above-described invention, the pellets is produced such that a part of the product is semi-melted by frictional heat caused in the in-granulation grinding step and compressively extruding step, and the semi-melted portion is solidified after granulation. This increases the grain strength, and hence increases the anti-collapse resistance of the pellet product. The rest portion of the pellet product is consolidated during the in-granulation grinding step and the compressively extruding step, thereby increasing the grain bulk density. The above-described semi-melting portion may be composed of a plurality of components that are different from one another.

Thus, according to the Embodiment 2, the raw material prepared into a predetermined compound, and the compound is processed by the multicavity-die type extrusion molding machine that performs steps including the grinding step and the compressively extruding step to produce an pellets. The pellet product is formed to include a central member consolidated to have a high bulk density and a melt-solidified surface member enclosing the central member. Thereby, the pellets are formed into, for example, a columnar grain having a compressively formed interior and the melt-solidified surface. Consequently, the pellets injected into a blast-furnace tuyere reaches a predetermine zone in a raceway without causing fluffy foreign matters that can cause clogging in a piping, and exhibits a high burning rate.

As described above, an important reason for melt-solidifying the surface of the pellets is that the increase in the strength of the pellets improves the burning rates of the pellets. Specifically, the melt-solidified surface of the pellets increases the strength of the pellets. An pellets having a low strength is collapsed during pneumatic transportation (delivery), and the pellets as is in a small shape is fed into the raceway. As such, the time in which the pellets resides in the raceway is very short, thereby reducing the burning rate.

More specifically, when a synthetic resin material having a large grain diameter is injected through a tuyere, the grain burns while circling and resides in the raceway for a long time in the circling state until the grain diameter is reduced to a certain extent. Thereafter, when the grain diameter is reduced to a certain extent, the grain is flown away from the raceway. However, when a synthetic resin material having a small grain diameter is injected through a tuyere, it is immediately flown away without residing in the raceway.

Generally, a so-called terminal velocity of a grain is the velocity of the grain when a resistance exerted on the grain moving in a fluid with a gravity force or a centrifugal force is balanced with a propulsive force of the grain. In a period in which the terminal velocity of the synthetic resin material in a raceway, which is injected through a tuyere, is sufficiently higher than the velocity of gas exhausted from the inside of the raceway, the synthetic resin material cannot be flown way from the raceway. As such, in the aforementioned period, since the synthetic resin circulates and resides in the raceway, so as to be sufficiently burned, therefore increasing the burning efficiency of the synthetic resin material. From the above description, it should be understandable that that since the pellets containing the synthetic resin material and having the melt-solidified surface according to the above-described invention has a high strength, the pellets injected into a blast furnace exhibits a high burning efficiency.

The multicavity-die type extrusion molding machine is thus used to produce the pellets from the raw material prepared by blending synthetic resin materials such as plastics materials. The multicavity-die type extrusion molding machine may be of a type capable of implementing steps including the grinding step and the compressively extruding step. For example, the extrusion molding machine may be of a type formed to include a cylindrical die ring having a large number of cavities on a circumference thereof, and a plurality of rolls rotatable in frictional engagement with the cylindrical die ring. In this case, the aforementioned raw material is ground between the cylindrical die ring and the plurality of rolls, and the ground material is compressively extruded in series through the cavities of the cylindrical die ring. Through the above-described grinding and compressively extruding steps, production is implemented for pellets formed to include a central member consolidated to have a high bulk density and a melt-solidified surface member enclosing the central member. In the pelletized-product production, continually compressive-extruded pieces are each cut into a predetermined length.

The synthetic resin material according to the Embodiment 2 may contain paper-containing filmy plastics. That is, the synthetic resin material may contain not only the filmy plastics arising a big problem in handling as a fuel material, but also paper materials such as corrugated cardboards.

In Embodiment 2, the surface of the pellets essentially needs to be melt-solidified. Specifically, it is essential that pellets be formed to include a central member consolidated to have a high bulk density and a melt-solidified surface member enclosing the central member.

The pellets of Embodiment 2, which contains the synthetic resin and has the melt-solidified surface, is suitable for injection to a furnace, particularly to a blast-furnace tuyere. Particularly, the pellets having the melt-solidified surface are not collapsed in pneumatic transportation, and in addition, have a high thermal efficiency.

As described above, the method according to Embodiment 2 controls the grain strength and the grain diameter to be in the predetermined ranges, and thereby produces the pellets formed to include the central member consolidated to have a high bulk density and a melt-solidified surface member enclosing the central member. As such, when the pellets is injected into, for example, a blast furnace, the pellets reaches a predetermine zone in a raceway without causing fluffy foreign matters that can cause clogging in, for example, a tank and/or a piping, hence exhibiting a high burning rate.

### EXAMPLE 1

First, the pellets of the above-described invention were compared with conventional pellets. The conventional pellets was produced according to a conventional method in which a synthetic-resin-based material was cut or crushed using a high-speed rotary bladed wheel, the synthetic resin material is semi-melted by frictional heat caused in the cutting or crushing operation, the semi-melted synthetic resin material is quickly cooled to be solidified, and the material is crushed using a rotary bladed wheel simultaneously with the solidification. When the thus-produced conventional pellets was injected through a blast-furnace tuyere, since the strength of the pellets is low, the time in which the pellets resides in a raceway was very short, and the burning efficiency was therefore low. On the other hand, however, the pellets of the above-described invention, which contains the synthetic resin material and has the melt-solidified surface, was produced by controlling the strength and the grain diameter to be within the predetermined ranges. As such, the pellets reached a predetermine zone in the raceway and resided long in the raceway, enabling a high thermal efficiency to be attained.

Subsequently, the pellets of the above-described invention, produced using the multicavity-die type extrusion molding machine, was compared with an out-of-invention-scope pellets. Specifically, an pellets was produced from a prepared raw material having grain sizes of 10 to 15 mm by using a multicavity-die type extrusion molding machine in which a die effective thickness T is 60 mm, and a die-cavity diameter d is 6 mm. The pelletizer-exit temperature was 110°C. In this case, the average strength index of the pellets was 500, and the size of the pellets was 6 (diameter) × 10 mm. For comparison, an pellets was produced from a prepared raw material having grain sizes of 10 to 15 mm by using the multicavity-die type extrusion molding machine in which the die effective thickness T is 60 mm, and the die-cavity diameter d is 6 mm. In this case, the average strength index of the pellets was 420, and the grain diameter was 6 mm.

The pellets thus produced was injected from an operating blast-furnace tuyere through a pneumatic-transferring facility, and states of occurrence of problems such as intrafacility clogging were investigated.
(a) The thus-produced pellets stored in a storage silo was quantitatively allotted from the silo. The allotted lot was delivered to the pneumatic-transferring facility, was then pneumatically transported from the pneumatic-transferring facility to a blast-furnace tuyere portion under the following conditions, and was then injected into the furnace.
   Carrier gas: Air
   Carrier-gas injection amount: 1,200 Nm³/hr
   Pellets injection amount: 62.5 kg/min
   Solid-gas ratio: 2.4 kg/kg
(b) In the above case, blast-furnace operating conditions were as follows:
   Pig output amount: 9,000 t/day
   Blast-air flow amount: 7,260 Nm³/hr
   Oxygen enrichment ratio: 4%
   Coke ratio: 447 kg/t. pig
   Pulverized-coal injection amount: 100 kg/t. pig
   Pellets injection amount: 10 kg/t. pig

The above-described injection of the pellets into the furnace was performed for two days.

As a result, the within-invention-scope pellets exhibited a high burning rate of 90% or higher. However, the out-of-invention-scope pellets exhibited burning rates ranging from 50 to 88% and caused clogging for the reason that the strength and the grain diameter are out of the ranges set for the above-described invention. Furthermore, the above-described within-invention-scope pellets caused no problem at all for the blast-furnace operation.

### EXAMPLE 2

In the same manner as that of Example 1 except for use of a below-described pellets of the above-described invention, which was produced using an extrusion molding machine with a multicavity-die, the pellets and a conventional pellets were injected from an operating blast-furnace tuyere through a pneumatic-transferring facility, and states of occurrence of problems such as intrafacility clogging were investigated. Specifically, the pellets was produced from a prepared raw material having grain sizes D of 10 to 15 mm by using an extrusion molding machine with a multicavity-die in which a die effective thickness T is 70 mm, and a die-cavity diameter d is 6 mm. The pelletizer-exit temperature was 110°C. In this case, the average strength index of the pellets was 600, and the size of the pellets was 6 (diameter) × 10 mm.

As a result, the within-invention-scope pellets exhibited a high burning rate of 90% or higher. However, the out-of-invention-scope pellets exhibited burning rates ranging from 50 to 88% and caused clogging for the reason that the strength and the grain diameter are out of the ranges set for the above-described invention. Furthermore, the above-described within-invention-scope pellets caused no problem at all for the blast-furnace operation.

### EMBODIMENT 3

The inventors found the following. A raw material is prepared to contain unmeltable components such as paper to allow the inclusion of at least 10% synthetic resin materials composed of a plurality of components having different melting points within a range of from 50 to 300°C. The thus-prepared raw material is processed using a multicavity-die type extrusion molding machine capable of performing steps including a grinding step and compressively extruding step, and an pellets containing the synthetic resin material and having a melt-solidified surface is thereby produced. In this case, the pellets are formed such that unmelted components such as paper are consolidated to form a central portion, and melted components are melt-solidified. When the pellets is injected to a blast-furnace tuyere, the pellets does not cause fluffy foreign matters that can cause clogging in a tank and/or a piping.

Hereinbelow, a detailed description will be made regarding pellets containing the synthetic resin material and having the melt-solidified surface, and a type of a production method for the pellets, and a type of an injection method thereof into a furnace according to Embodiment 3.

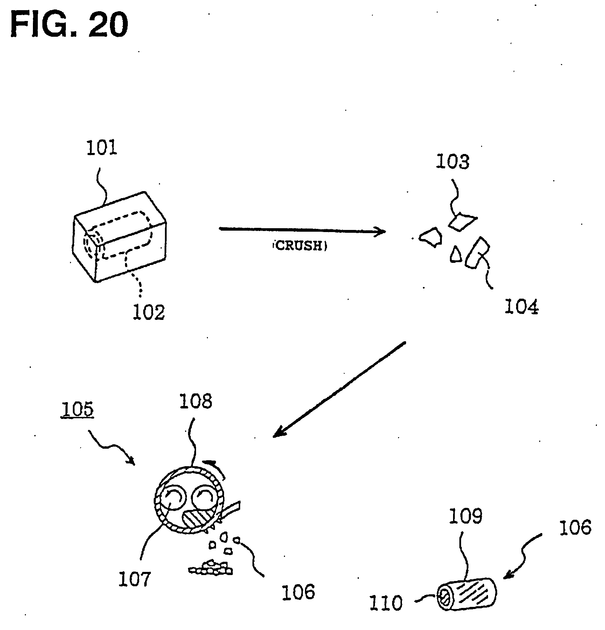

Fig. 20 shows an outline of a production method according to Embodiment 3 for the pellets containing the synthetic resin and having the melt-solidified surface according to Embodiment 3. In the production method for the pellets containing the synthetic resin and having the melt-solidified surface according to Embodiment 3, the pellets are composed of components (such as polyethylene films) (which hereinbelow will be referred to as "A") having a melting point within a range of from 50 to 300°C, and other unmelted components (such as paper) (which hereinbelow will be referred to as "B"). The component A is semi-melted by frictional heat caused in the in-granulation grinding step and compressively extruding step, and the semi-melted portion is solidified after granulation. This increases the grain strength, and hence increases the anti-collapse resistance of the pellets. The component A may preferably be composed of a plurality of components having different melting points within the range of from 50 to 300°C. More preferably, the melting points of the aforementioned components are in a range of from 100 to 280°C. When the melting points are in the range of from 100 to 280°C, the grain strength is sufficiently increased, and the anti-collapse resistance is thereby increased.

In Embodiment 3, the synthetic resin material such as a plastics material is prepared to allow the inclusion of at least 10% of the components having melting points within the range of from 50 to 300°C. A reason therefor is as described as follows. The material having thus prepared is processed by a ring-die type pelletizer that performs steps including a grinding step and a compressively extruding step to produce pellets. The produced pellets is formed to include a central member consolidated to have a high bulk density and a melt-solidified surface member enclosing the central member. Thereby, the pellets is formed into, for example, a columnar grain having a compressively formed interior and the melt-solidified surface. Consequently, the pellets injected into a blast-furnace tuyere reaches a predetermine zone in a raceway without causing fluffy foreign matters that can cause clogging in a piping. In the above-described invention, the content of the components having the melting point within the range of from 50 to 300°C is preferably 50% or higher.

When the content of the components having the melting point within the range of from 50 to 300°C is lower than 10%, the melt-solidification of the surface is insufficient. In this case, the molded grain can collapse, thereby causing fluffy foreign matters that can cause clogging in a tank and/or a pipeline.

An important reason for melt-solidifying the surface of the pellets is that the increase in the strength of the pellets improves the burning rate of the pellets. Specifically, the melt-solidified surface of the pellets increases the strength of the pellets. An pellets having a low strength is collapsed during pneumatic transportation (delivery), and the pellets as is in a small shape is fed into the raceway. As such, the time in which the pellets reside in the raceway is very short, therefore reducing the burning rate.

More specifically, when a synthetic resin having a large grain diameter is injected through a tuyere, the grain burns while circling and resides in the raceway for a long time in the circling state until the grain diameter is reduced to a certain extent. Thereafter, when the grain diameter is reduced to a certain extent, the grain is flown away from the raceway. However, when a synthetic resin material having a small grain diameter is injected through a tuyere, it is immediately flown away without residing in the raceway.

Generally, a so-called terminal velocity of a grain is the velocity of the grain when a resistance exerted on the grain moving in a fluid with a gravity force or a centrifugal force is balanced with a propulsive force of the grain. In a period in which the terminal velocity of the synthetic resin material in a raceway, which is injected through a tuyere, is sufficiently higher than the velocity of gas exhausted from the inside of the raceway, the synthetic resin material cannot be flown way from the raceway. As such, in the aforementioned period, since the synthetic resin circulates and resides in the raceway, so as to be sufficiently burned, therefore increasing the burning efficiency of the synthetic resin material. From the above description, it should be understandable that that since the pellets containing synthetic resin material and having the melt-solidified surface according to the above-described invention has a high strength, the pellets injected into a blast furnace exhibits a high burning efficiency.

The multicavity-die type extrusion molding machine is thus used to produce the pellets from the raw material prepared by blending synthetic resin materials such as plastics materials. The multicavity-die type extrusion molding machine may be of a type capable of implementing steps including the grinding step and the compressively extruding step. For example, the extrusion molding machine may be of a type formed to include a cylindrical die ring having many cavities on a circumference thereof, and a plurality of rolls rotatable in frictional engagement with the cylindrical die ring. In this case, the aforementioned raw material is ground between the cylindrical die ring and the plurality of rolls, and the ground material is compressively extruded in series through the cavities of the cylindrical die ring. Through the above-described grinding and compressively extruding steps, production is implemented for pellets formed to include a central member consolidated to have a high bulk density and a melt-solidified surface member enclosing the central member. In the pelletized-product production, continually compressive-extruded pieces are each cut into a predetermined length. The predetermined length is 40 mm or shorter; and preferably, it is 15 mm or shorter.

The synthetic resin material according to the Embodiment 3 may contain paper-containing filmy plastics. That is, the synthetic resin material may contain not only the filmy plastics arising a big problem in handling as a fuel material, but also paper materials such as corrugated cardboards.

In Embodiment 3, the surface of the molded grain (pellets) essentially needs to be melt-solidified. Specifically, it is essential that pellets are formed to include a central member consolidated to have a high bulk density and a melt-solidified surface member enclosing the central member.

The average bulk density of the above-described central member is preferably 0.25 g/cm³ or higher. In addition, the thickness of the melt-solidified surface member is preferably 1 mm or larger.

In Embodiment 3, the grain diameter of the molded grain is 40 mm or smaller; or preferably, the grain diameter is in a range of from 5 to 10 mm.

The pellets of Embodiment 3, which contains the synthetic resin and has the melt-solidified surface, is suitable for injection to a furnace, particularly to a blast-furnace tuyere. Specifically, the pellets having the melt-solidified surface are not collapsed in pneumatic transportation, and in addition, have a high thermal efficiency.

As described above, the method according to Embodiment 3 produces the pellets formed to include the central member consolidated to have a high bulk density and a melt-solidified surface member enclosing the central member. As such, when the pellets is injected into, for example, a blast furnace, the pellets reaches a predetermine zone in a raceway without causing fluffy foreign matters that can cause clogging in, for example, a tank and/or a piping.

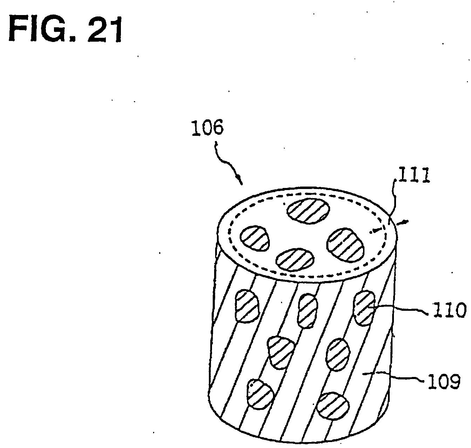

Fig. 21 is an enlarged view of the pellet product of Embodiment 3. The pellet product, shown by numeral 106, is formed columnar, in which paper or high-melting melting plastic components or the like 110 are positioned in a consolidated state in a central portion, and portions 110 thereof are exposed on the surface of the pellet product. A thickness 111 of a melt-solidified surface member 109 is 1 mm or larger. The ratio of the melt-solidified surface member to the overall area of the pellet product is 10% or higher; and it is preferably 50% or higher.

The method of Embodiment 3 will be described hereinbelow in comparison with a comparison example.

First, the pellets of the above-described invention was compared with a conventional pellets. The conventional pellets was produced according to a conventional method in which a synthetic-resin-based material was cut or crushed using a high-speed rotary bladed wheel, the synthetic resin material is semi-melted by frictional heat caused in the cutting or crushing operation, the semi-melted synthetic resin material is quickly cooled to be solidified, and the material is crushed using a rotary bladed wheel simultaneously with the solidification. When the thus-produced conventional pellets was injected through a blast-furnace tuyere, since the strength of the pellets is low, the time in which the pellets resides in a raceway was very short, and the burning efficiency was therefore low. On the other hand, however, since the pellets of the above-described invention, which contains the synthetic resin material and has the melt-solidified surface, has a high strength, it resided long in the raceway and enabled a high thermal efficiency to be achieved.

Subsequently, the pellets of the above-described invention, produced using the multicavity-die type extrusion molding machine, was compared with an out-of-invention-scope pellets. Specifically, as shown in Table 3, raw materials were prepared by changing the mixture ratio of components A (packaging-polyethylene-film shredded fractions), which have melting points in the range of from 50 to 300°C, and other unmelatable components B (corrugated-cardboard fractions). The changed mixture ratios were (1) 0/100, (2) 3/97, (3) 8/92, (4) 10/90, (5) 15/85, (6) 50/50, (7) 95/5, and (8) 100/0.

Subsequently, from the raw materials thus prepared, molded grains (pellets) were produced using a multicavity-die type extrusion molding machine capable of performing steps including grinding and compressively extruding steps. In this case, the molding temperature was 100°C. The grain strengths of the produced molded grains (the strengths are shown in values on the basis of 100 set as the grain strength of (8)) and the bulk densities (T/m³) thereof were investigated with the results as shown in Table 3. The diameter of the molded grain (pellet product) was 6 mm, and the length thereof was 10 mm. The thickness of melt-solidified surface members were (1) 0 mm, (2) 0.1 mm, (3) 0.5 mm, (4) 1.0, (5) 1.5 mm, (6) 2.0 mm, (7) 2.3 mm, and (8) 3.0 mm.

The pellets thus produced was injected from an operating blast-furnace tuyere through a pneumatic-transferring facility, and states of occurrence of problems such as intrafacility clogging were investigated.
(a) The thus-produced molded grains stored in a storage silo were quantitatively allotted from the silo. The allotted lot was delivered to the pneumatic-transferring facility, was then pneumatically transported from the pneumatic-transferring facility to a blast-furnace tuyere portion under the following conditions, and was then injected into the furnace.
   Carrier gas: Air
   Carrier-gas injection amount: 1,200 Nm³/hr
   Pellets injection amount: 62.5 kg/min
   Solid-gas ratio: 2.4 kg/kg
(b) In the above case, blast-furnace operating conditions were as follows:
   Pig output amount: 9,000 t/day
   Blast-air amount: 7,260 Nm³/hr
   Oxygen enrichment ratio: 4%
   Blast-air temperature: 1,200°C
   Coke ratio: 447 kg/t. pig
   Pulverized-coal injection amount: 100 kg/t. pig
   Pellets injection amount: 10 kg/t. pig

The above-described injection of the pellets into the furnace was performed for two days.

As a result, in a case of using the molded grains (1) not containing the components A (packaging-polyethylene-film shredded fractions) having the melting points in the range of from 50 to 300°C, while the bulk density was as high as 0.79, the grain strength was as low as 25, and clogging occurred one or more times in one hour. Also in a case of using the molded grains (2) containing 3% of the components A (packaging-polyethylene-film shredded fractions) having the melting points in the range of from 50 to 300°C, the grain strength was as low as 35, and clogging occurred one or more times in one hour. Also in a case of using the molded grains (3) containing 8% of the components A (packaging-polyethylene-film shredded fractions) having the melting points in the range of from 50 to 300°C, the grain strength was as low as 60, and clogging occurred one or more times in 12 hours. In the above-described molded grains (1) to (3), the thickness of the melt-solidified surface members were 1 mm or smaller.

In a case of using the molded grains (4) containing the components A (packaging-polyethylene-film shredded fractions) having the melting points in the range of from 50 to 300°C by 10% which is the lower limit value, the grain strength was relatively increased to 75, and the clogging occurrence frequency was reduced to be one or fewer time in 12 hours. In a case of using the molded grains (5) containing 15% of the components A (packaging-polyethylene-film shredded fractions) having the melting points in the range of from 50 to 300°C, the grain strength was increased to 80, and the clogging occurrence frequency was reduced to be one or fewer time in one day. In a case of using the molded grains (6) containing 50% of the components A (packaging-polyethylene-film shredded fractions) having the melting points in the range of from 50 to 300°C, the grain strength was increased to 90, and the clogging occurrence frequency was significantly reduced to be one or fewer time in two days. In a case of using the molded grains (7) containing 95% of the components A (packaging-polyethylene-film shredded fractions) having the melting points in the range of from 50 to 300°C, the grain strength was further increased to 98, and the clogging occurrence frequency was as low as one or fewer time in two days. In this case, no problem at all was occurred during the blast-furnace operation. In a case of using the molded grains (8) containing 100% of the components A (packaging-polyethylene-film shredded fractions) having the melting points in the range of from 50 to 300°C, the grain strength was increased to 100, and the clogging occurrence frequency was as low as one or fewer time in two days.

As long as the melting-point conditions satisfied, the clogging occurrence frequency was very low even in the case where the bulk density was 0.30 or 0.33.

As is apparent from the above description, the clogging occurrence frequency greatly depends on the content of the components A having the melting points in the range of from 50 to 300°C.

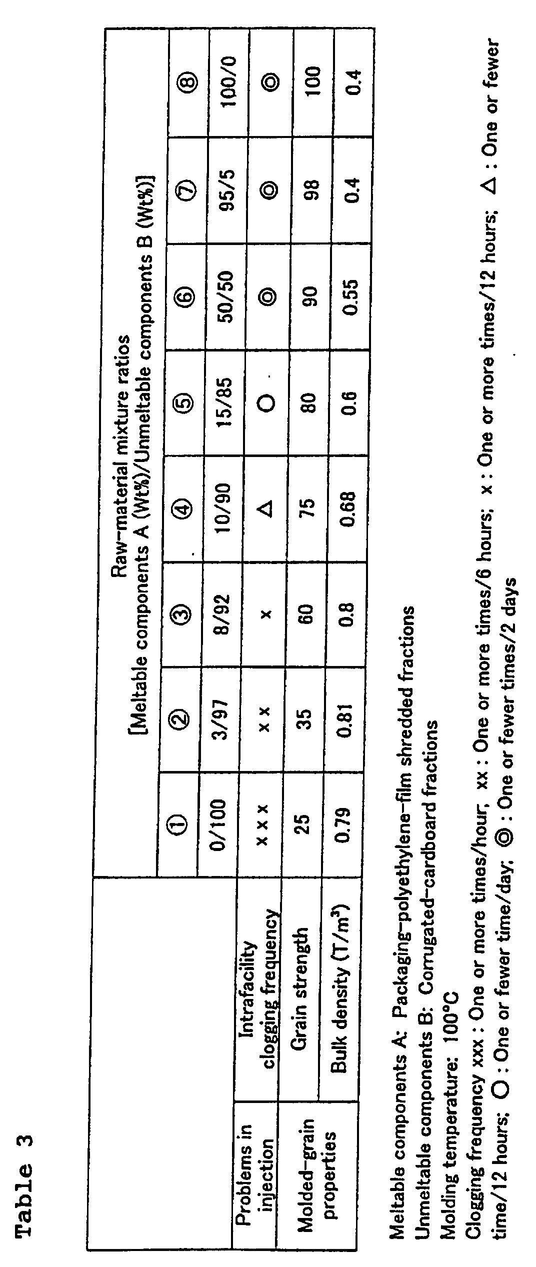

## Claims

1. A method for producing pellets, comprising the steps of:
providing waste plastics comprising solid plastics (A) originating in molded plastics and at least one plastics (B) selected from the group of thin plastics and foamy plastics that originate in non-molded plastics; and
pelletizing the waste plastics so that at least a part of the at least one plastics (B) is either semi-melted or melted, and at least a part of the solid plastics (A) is neither semi-melted nor melted to remain in a solid state, the pelletizing comprising compressing, crashing and extruding the waste plastics.

2. The method according to claim 1, wherein the pellets are used as a raw material which is blown into a furnace.

3. The method according to claim 1, wherein the pellets are used as a raw material which is charged into a coke oven.

4. The method according to claim 1, wherein a weight ratio of the solid plastics (A) to the sum of the solid plastics (A) and the at least one plastics (B) selected from the group of the thin plastics and the foamy plastics that originate in the non-molded plastics, which is expressed as (A)/{(A) + (B)}, is in a range of 0.1 to 0.7.

5. The method according to claim 1, wherein a weight ratio of the solid plastics (A) to the sum of the solid plastics (A) and the at least one plastics (B) selected from the group of the thin plastics and the foamy plastics that originate in the non-molded plastics, which is expressed as (A)/{(A) + (B)}, is in a range of 0.2 to 0.6.

6. The method according to claim 1, further comprising the step of mixing the solid plastics (A) and the at least one plastics (B) before the step of pelletizing.

7. The method according to claim 1, wherein the step of pelletizing comprises mixing, compressing, crashing and extruding the waste plastics.

8. The method according to claim 1, wherein the step of pelletizing comprises:
feeding the waste plastics into an extrusion molding machine, the extrusion molding machine comprising a ring die having a plurality of die cavities to pass through, and at least one roller provided inside of the ring die to be in contact with an inner peripheral surface of the ring die;
and
compressing and crashing the waste plastics between the roller and the inner peripheral surface of the ring die, pushing the waste plastics into the die cavities, and extruding the waste plastics through the die cavities.

9. The method according to claim 8, wherein the step of pelletizing further comprises cutting or scraping molded plastics extruded onto an outer surface of the ring die through the die cavities to obtain granular plastic moldings.

10. Pellets containing a synthetic resin, comprising:
a melt-solidified surface; and
a strength sufficient to reach a predetermined zone in a raceway of a furnace and a grain diameter sufficient to be fed at a velocity not lower than a limiting velocity thereof during injection into the furnace,
the strength sufficient to reach the predetermine zone in the raceway of the furnace grain strength having an average strength index δ ≥ 500, wherein δ = Σδiωi, δi is a ratio between a load (kg) and a displacement (mm) when a vertical load is applied to the grain, and ωi is a weight ratio; and
the grain diameter sufficient to be fed at the velocity not lower than the limiting velocity having a value not smaller than (3 × d² × t/2)^{1/3}, where d is a diameter of the pellet, and t is a length of the pellet.

11. A method for producing pellets, comprising the steps of:
preparing a ring die having a plurality of through-cavities of which T/d is in a range of from 6 to 12, where T represents the effective thickness of the ring die, and d represents the diameter of the through-cavity;
preparing a pelletizer comprising the ring die and a roller disposed inside thereof; and
feeding a raw material containing synthetic resins into the ring die.

12. The method according to claim 11, wherein a ratio of a grain size D of the raw material with respect to the diameter d of the through-cavity, D/d, is in a range of from 1.2 to 3.

13. Pellets containing a synthetic resin material, **characterized by**:
a melt-solidified surface; and
the synthetic resin material containing at least 10% of a component having a melting point of from 50 to 300°C.

14. The pellets according to claim 13, wherein the synthetic resin material contains paper-containing filmy plastics.
